(19) Europäisches Patentamt
European Patent Office
Office européen des brevets

(11) **EP 4 050 974 A1**

(12) **EUROPEAN PATENT APPLICATION**
published in accordance with Art. 153(4) EPC

(43) Date of publication:
**31.08.2022 Bulletin 2022/35**

(21) Application number: **20878883.6**

(22) Date of filing: **19.10.2020**

(51) International Patent Classification (IPC):
**H05H 1/24** (2006.01)

(52) Cooperative Patent Classification (CPC):
**H05H 1/24**

(86) International application number:
**PCT/JP2020/039235**

(87) International publication number:
**WO 2021/079843 (29.04.2021 Gazette 2021/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 21.10.2019   JP 2019191621
27.12.2019   JP 2019238351
26.03.2020   JP 2020055287
06.04.2020   JP 2020068121
18.06.2020   JP 2020105259
24.09.2020   JP 2020159247

(71) Applicants:
• **Ishikawa Labo Corporation
Koza-gun,
Kanagawa 253-0113 (JP)**
• **Ishikawa, Yasuo
Kamakura-shi, Kanagawa, 248-0036 (JP)**

(72) Inventor: **ISHIKAWA, Yasuo
Kamakura-shi, Kanagawa 248-0036 (JP)**

(74) Representative: **Viering, Jentschura & Partner
mbB
Patent- und Rechtsanwälte
Am Brauhaus 8
01099 Dresden (DE)**

(54) **PLASMA REACTION METHOD AND PLASMA REACTION DEVICE**

(57)    In order to transform carbon dioxide into hydrogen and to make it disappear and further to obtain hydrogen at a low cost, energy amplification agent 6 is supplied into a reactor 1 to generate fine particles of the agent 6 inside of the heated reactor by vaporizing the agent, and, then, the fine particles are ionized by electromagnetic waves to form a plasma space 5 including a combination of atoms of the fine particles, ions and electrons in which the fine particles themselves are decayed in plasma to be separated into protons, neutrons and electrons by electromagnetic waves in shape of standing waves emitted from a wall surface 1a and large-strength electromagnetic waves generated at an uncertain period through amplification functions of the fine particles, so that hydrogen is obtained, and heat is obtained in such a manner that protons and neutrons are mainly reunited with each other in a plasma atmosphere after the plasma decay when gas to be treated is supplied into the plasma space.

FIG.1

EP 4 050 974 A1

**Description**

Technical Field

This invention relates to a method of and an apparatus for forming a plasma space by electromagnetic waves at a low temperature, into which gas to be treated is supplied to decay atoms of gas to be treated thereby to produce heat.

Background of the Technology

The inventor of this application has been conventionally developing a technology for producing hydrogen from carbon dioxide and water, in which a reactor made of stainless steel includes sodium hydroxide and stainless steel powders as reaction agents and is heated at a temperature above 500°C to produce fine particles, between which and the inner wall of the reactor a nuclear reaction is generated (WO2012/011499A1).

Further, if water is supplied into the reactor having the same structure while its temperature is controlled, hydrogen gas is produced to be ionized. This fact is disclosed in Japanese Patent Laid-Open Publication No. 2017-222550.

Prior Art

Patent Literature

   Patent Literature 1: WO2012/011499A1
   Patent Literature 2: Japanese Laid-Open Publication 2017-22250

Summary of the Invention

Subject to be Solved by the Invention

The Patent Literature 1 discloses that the inner surface of the reactor is opposed to a plasma atmosphere to generate a nuclear reaction on the inner surface thereof. However, it is never recognized that a plasma atmosphere is formed in its inner whole portion by the fine particles of a reaction agent (corresponding to an amplification agent in this application), and the plasma atmosphere is excited with electromagnetic waves ejected from the inner surface of the reactor and from the fine particles of the amplification agent.

In addition, the above Patent Literature discloses that hydrogen gas generated in the reactor is ionized. However, it is never recognized that a plasma reaction is mainly performed by the reaction agent itself and standing waves emitted from the inner wall of the reactor and that the fine particles and standing waves and other waves amplified by the fine particles are generated at an uncertain timing on the basis of "uncertainty principle".

The inventor of this Application has performed various experiments to find that there is a possibility that atomic nucleuses are decayed and reunited with each other at an extremely low temperature of 200°C to 300°C judging from quantum mechanics. Therefore, a technical idea conventionally unknown is clarified herein.

Means for Solving the Subject

A method of plasma reaction according to this invention comprises the steps of : forming a closed space with a wall surface which ejects standing waves of electromagnetic waves ; supplying an amplification agent for amplifying energy of electromagnetic waves into the closed space ; heating the amplification agent and the wall surface to emit electromagnetic waves from the amplification agent itself and the wall surface, so that the amplification agent is vaporized to form a first fine particles group ; ionizing the first fine particle group by the electromagnetic waves to produce a second fine particle group comprising a mixture of atoms of the amplification agent, ions and electrons, so that the mixture forms a plasma space ; generating large-energy electromagnetic waves at a timing on the basis of "uncertainty principle" by means of an amplification-function of the second fine particle group and an electromagnetic wave emitting function thereof and an electromagnetic wave-emitting-function from the wall surface thereby to decay the second fine particles themselves to transform them into protons, neutrons and electrons which are added to the second fine particles so as to form a third fine article group ; and reuniting protons with electrons in the third fine particle group to generate hydrogen.

It is preferable that gas to be treated is supplied into the third fine particle group of the plasma space to separate gradually atoms as its gas ingredients into ions of those atoms, protons, neutrons and electrons, through an ionizing function and a plasma decaying function, which are added to the third fine particle group to form a fourth fine particles group, and further, at least one combination of protons and neutrons as a plasma reunion function performs an exothermic function.

In order to increase the exothermic function, the plasma reunion function is preferably actively performed by means of increasing the number of protons or neutrons in the plasma space, and number of protons is increased by supplying hydrogen.

The amplification agent comprises preferably at least one element of the first or second group in the main group element shown in the periodic table or a compound including at least element mentioned above, and the gas to be treated preferably comprises at least one kind of gases including carbon dioxide, steam, nitrogen gas, 6 plutonium hexafluoride or PCB gas.

The amplification agent includes preferably at least one kind of stainless steel, zinc, iron, aluminum, copper, silver, gold, palladium, platinum, manganese, molybdenum, titanium and zirconium in shape of plate, powder or clump or liquefied phosphorus or mercury.

The wall surface for emitting electromagnetic waves therefrom comprises preferably at least one kind of stainless steel material, carbon material or aluminum material.

The amplification agent comprises preferably molten salt which is dripped into the plasma space from an upper portion thereof, drips of the molten salt are collected at a lower portion of the plasma space to be circulated to the upper portion of the plasma space, and a heating pipe system is disposed in the plasma space to generate the fine particles of the amplification agent by a cooperative function between the molten drips and the heating pipe system.

An apparatus for plasma reaction according to this invention comprises : a plasma reactor having a wall surface which is heated to emit electromagnetic waves ; a plasma space formed in the plasma reactor and including a mixture of atoms, ions of atoms, nucleons and electrons as fine particles moving in various directions ; an amplification agent supplied in the plasma space as a main ingredient of the plasma space to be changed into fine particles when it is heated, so that the energy of electromagnetic waves emitted into the plasma space is amplified at an uncertain timing ; and a heating device for heating the wall surface of the plasma reactor and the amplification agent.

The wall surface of the reactor comprises preferably at least one kind of carbon material, stainless steel material, iron material, aluminum material or copper material.

The amplification agent comprises preferably molten salt which includes at least one kind of metal sodium, metal potassium, or lithium fluoride and which is supplied into the plasma space of the reactor from outside to be then fed outside so as to be circulated through a circulating device.

The amplification agent comprises preferably a combination of a compound including alkali metal with at least one kind of metal powders such as stainless steel powder, iron powder, aluminum powder, zine powder and copper powder and is disposed in the plasma reactor so as to be supplemented.

The heating device comprises preferably an electric heater which is disposed in a wall of the plasma reactor, or on an outer surface of the wall, or in the plasma reactor.

The heating device comprises preferably a heating pipe system disposed in the plasma reactor in order to feed heating gas through a gas burner thereinto.

It is preferable that a plurality of hydrogen injection cylinders is disposed in an opposed manner, and pressurized hydrogen is supplied into the hydrogen injection cylinders.

It is preferable that a heat exchanger is disposed in the plasma space to take out a part of heat in the plasma space.

Effect of the Invention

In this invention, a closed space is formed with a wall surface for emitting standing waves as electromagnetic waves, and a plasma space is formed in such a manner that the closed space is maintained at a predetermined temperature to make fine particles of the amplification agent fly out at a highspeed. Therefore, the amplification agent itself is decayed in plasma to generate hydrogen. When gas to be treated such as carbon dioxide ($CO_2$), nitrogen ($N_2$) and steam ($H_2O$) is fed into the plasma space, each gas is separated into each of atoms included in the gas, and then a part of atoms is separated into irons and electrons to produce a mixture of atoms not ionized, ions and electrons in the gas to be treated to form a new plasma space in which the mixture is added to the fine particles of the amplification agent. In this manner, both fine particles derived from the amplification agent and the gas to be treated are decayed in plasma by large-energy electromagnetic waves generated at an uncertain period on the basis of the "uncertainty principle". Thus, in the case of carbon dioxide, it can be extinguished or changed into hydrogen, and in the case of nitrogen or steam, it can be changed into hydrogen. In addition, after the plasma-decay, some reunions such as proton-proton, neutron-neutron, proton-neutron or proton-electron occur to generate an exothermic reaction through which heat is obtained. Further, if a kind of the amplification agents for the plasma space is properly selected, the plasma space can be formed at a temperature of 200°C to 300°C to produce a simple and small apparatus at a low cost.

Brief Description of the Drawings

Figure 1 shows a schematic view of a plasma reaction apparatus of this invention.
Figure 2 shows a structural view of a fin assembly disposed in a reactor.
Figure 3 shows a view for explaining a state of disposition of amplification agent.
Figure 4 shows a view for explaining another state of disposition of the amplification agent.
Figure 5 shows a view for explaining another state of disposition of the reactor.
Figure 6 shows a systematic view for measuring a strength of electromagnetic waves emitted from material of the reactor.
Figure 7 is a graph for showing a strength of ionized energy.
Figure 8 shows a schematic structural view of an experimental reactor.
Figure 9 shows an operational view of a plasma space.
Figure 10 shows a view for explaining an induced emission of electromagnetic waves.
Figure 11 shows a functional view for explaining a reflection of electromagnetic waves on a wall surface of the reactor.
Figure 12 shows a structural view of an atom.
Figure 13 shows a view for explaining an amplificating function of a sodium ion.
Figure 14 shows a view for explaining a state of forming sheath.
Figure 15 shows a view for explaining standing waves.
Figure 16 shows a graph for explaining a relation between frequency, temperature and energy of blackbody radiation.
Figure 17 shows a view for explaining a plasma-decay.
Figure 18 shows a graph for explaining bonding energy of one nucleon of each element.
Figure 19 shows a view for explaining plasma-decay and plasma-reunion.
Figure 20 shows a graph for explaining the kind of generated gases at a time of plasma-decay in the case of potassium titanate being used as the amplification agent.
Figure 21 shows a schematic view for explaining an experimental system.
Figure 22 shows a view for explaining an operation of pressure gauges in the experimental system.
Figure 23 shows a graph for explaining a state of electromagnetic waves in case that a wall surface of a reactor is heated at 500°C.
Figure 24 shows a view for explaining a state of the inside of the reactor at a generating time of a high-strength energy.
Figure 25 shows a view for explaining a state of ionization of hydrogen.
Figure 26 shows a structural view for explaining another experiment of plasma reactor of this invention.
Figure 27 shows a view for explaining a plasma-reunion.
Figure 28 shows a view for explaining an operation of the plasma reactor for obtaining heat.
Figure 29 shows a structural view for explaining still another embodiment of the plasma reactor of this invention.
Figure 30 shows a structural view for explaining still another embodiment of the plasma reactor of this invention.
Figure 31 shows a structural view for explaining still another embodiment of the plasma reactor of this invention.
Figure 32 shows a sectional view along the line A-A shown in Figure 31.
Figure 33 shows a structural view for explaining still another embodiment of the plasma reactor of this invention.
Figure 34 shows a structural view for explaining still another embodiment of this invention.

Embodiment of the Invention

The embodiments of this invention will now be explained with reference to the drawings.

1.General Structure of Plasma Reactor

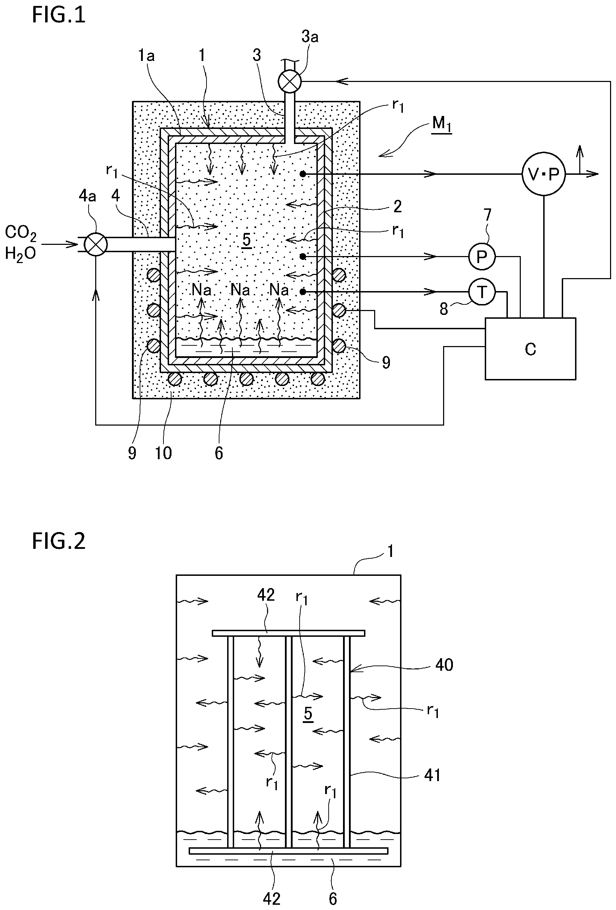

In Figure 1, a plasma reaction apparatus $M_1$ of this invention has a main body of a reactor 1, and the main body is made of material which has a good heat resistance, emits electromagnetic waves in the case of being heated, and can form a closed space. That is, e.g., stainless steel (SUS340, 310 and 316), iron or ceramic through which air does not pass is used. A carbon layer 2 is formed on the inner surface 1a for prevention of the formation of an oxide film thereon. On the upper surface of the main body is provided a discharging pipe 3 for discharging gas in the main body while at the center portion of the side wall of the main body is provided an inflow cylinder 4 for supplying gases such as carbon dioxide, water, nitrogen, etc., from outside. In addition, the discharging pipe 3 and the inflow cylinder 4 have two automatically closing and opening valves 3a and 4a, respectively, which are connected to a controller C, respectively. The controller C is also connected to a vacuum Pump V for making a vacuum in a plasma space 5, a pressure gauge 7 for measuring a pressure therein and a thermometer 8 for measuring a temperature therein, respectively.

An amplification agent 6 is accommodated at the bottom of the reactor 1 to amplify energy of electromagnetic waves in the plasma space 5, and an electric heater 9 is provided at the lower half portion of the reactor 1 and the bottom portion thereof to heat the plasma space 5 and the reactor 1 at the same time. The electric heater 9 is also connected to the controller C. In addition, insulation material 10 covers the circumferential surface of the reactor 1, and the reactor 1 has a fin assembly 4 in Figure 2 therein which comprises two upper and lower horizontal plates 42 and 42 and some vertical plates 41, 41 ... 41 for connecting them with each other. The fin assembly 40 is made of the same material (SUS material) as that of the reactor 1, and electromagnetic waves n and n are emitted from the upper and lower horizontal plates 42 and the vertical plates 41 when the reactor 1 is heated to generate many standing waves while the emitted electromagnetic waves are reflected on the plates 41 and 42. In addition to this function, the fin assembly 40 has also a function for heat conduction to uniform temperature of the plasma space 5.

2. Generation of Electromagnetic Waves

The basic technical idea of this invention is to generate electromagnetic waves which are amplified to be changed into high-strength electromagnetic waves. Accordingly, it is important to obtain electromagnetic waves with high number frequency.

Further, if standing waves, both ends of which are fastened are generated, its energy increases in proportion to the square of those frequencies. Therefore, the following electromagnetic wave generation system is preferable. In order to obtain the standing waves, as shown in Figure 1, it is designed that a closed space is formed with an inner wall surface 1a of the reactor 1, and the outer wall surface thereof is heated by an electric heater 9 thereby to emit electromagnetic waves into the inside of the closed space. In Figure 1, the carbon layer 2 formed on the inner surface is heated in addition to the stainless wall of the reactor 1, and, therefore, black body radiation by PLANCK (scholar of quantum mechanics) is performed.

The reactor 1 necessitates a good sealing property for prevention of the inflow of air from outside, and, therefore, it is preferable that the carbon layer 2 is formed on the inner stainless wall with a high-strength. When metal is heated, some electromagnetic waves are emitted. In the case of stainless steel, micro waves with frequencies of $10^{9-10}$ are emitted at a temperature of 200 to 400°C, far-infrared rays or infrared rays with frequencies of $10^{13-14}$ are emitted at a temperature of 400 to 600°C, and visible light rays with frequencies of $10^{13-14}$ are emitted at a temperature above 700°C.

With respect to electromagnetic waves with a large energy (a high frequency), ion material, carbon material, steel material or aluminum material is more preferable than stainless steel material. However, stainless steel material is preferably used with respect to a heat-resistance, an oxidation resistance and a strength. Electromagnetic waves are emitted from not only the inner surface wall but also the amplification agent. As an amplification agent, sodium (Na) or potassium (K) as alkali metal is selected, and aluminum or titanium, both of which belong to the transition metal group and are active to electromagnetic waves is selected. These elements emit electromagnetic waves by means of the excitation by lattice vibration and are excited by electromagnetic waves from the inner wall surface 1a and the carbon layer 2 to emit newly electromagnetic waves at a time of transition (quantum jump). The newly emitted electromagnetic waves excite surrounding atoms to generate other new electromagnetic waves from the atoms. The other new electromagnetic waves include various frequencies from a large number of frequencies to a small number of frequencies in proportion to temperature. That is, the higher a temperature becomes, the larger the energy of electromagnetic waves becomes.

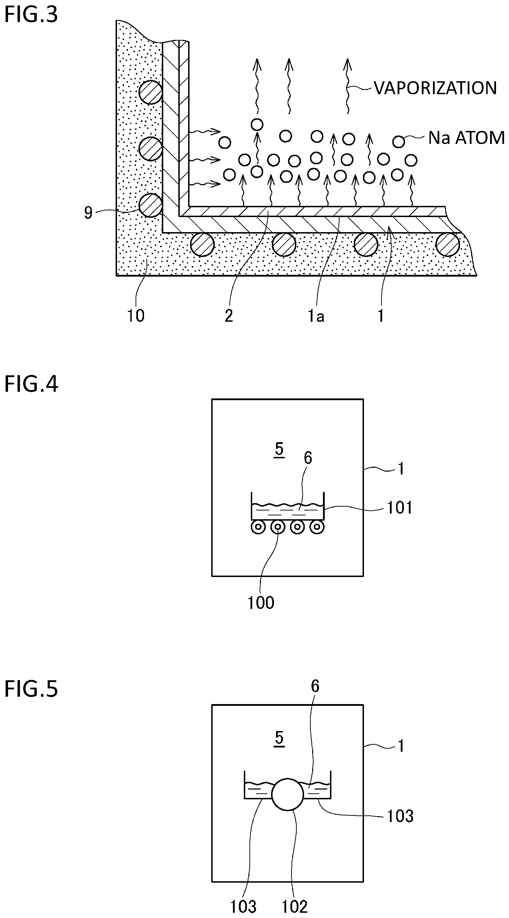

In the case that, as shown in Figure 3, the amplification agent is put directly on the carbon layer 2 heat from the electric heater 9 is efficiently conducted to the agent, so that large-energy electromagnetic waves can be generated. In addition, as shown in Figure 4, also in case that a plurality of electric heaters 100, 100 ... 100 are disposed in the reactor 1 so as to support a tray 101 thereon in which the agent 6 is put, the agent 6 can be efficiently heated. Further, as shown in Figure 5, the agent 6 can be efficiently heated also in a manner that a gas pipe 102 is provided in the reactor 1, and two receiving plates 103 and 103 are provided at the side surfaces of the gas pipe 102 to receive the agent 6. Instead, the electromagnetic waves may be generated outside of the reactor 1 by an electromagnetic wave generation device to direct them into the reactor.

3. Material of Reactor

The reactor 1 necessitates a characteristic feature which is resistant to a high temperature and which can prevent its wall from forming an oxide layer thereon. Stainless steel material is desirable from the viewpoint of heat-resistance and corrosion-resistance. From the viewpoint of electromagnetic waves emittance at a heating temperature of 300°C to 600°C, iron (Fe) or ceramic can be used. In addition, from the viewpoints of a heat-resistance, a corrosion-resistance and an electromagnetic wave emittance, the reactor 1 may be made of a carbon cylinder which is formed by molding. Furthermore, in the case that carbon is sprayed on a stainless wall to form a carbon layer, formation of oxide film can be effectively prevented, and electromagnetic waves from both of the stainless wall and the carbon layer are emitted to excite atoms of the carbon layer from which infrared rays with a large number of frequencies are emitted. Furthermore, in the case that a molybdenum layer (MO) is formed on the stainless wall through a spraying operation, electrons in the plasma space 5 collide with the molybdenum layer at a high speed to emit X-rays, so that an energy in the plasma space 5 is increased. Accordingly, from the viewpoint of electromagnetic wave with a large energy, it is preferable that iron material, carbon material, steel material, aluminum material or stainless steel material is used.

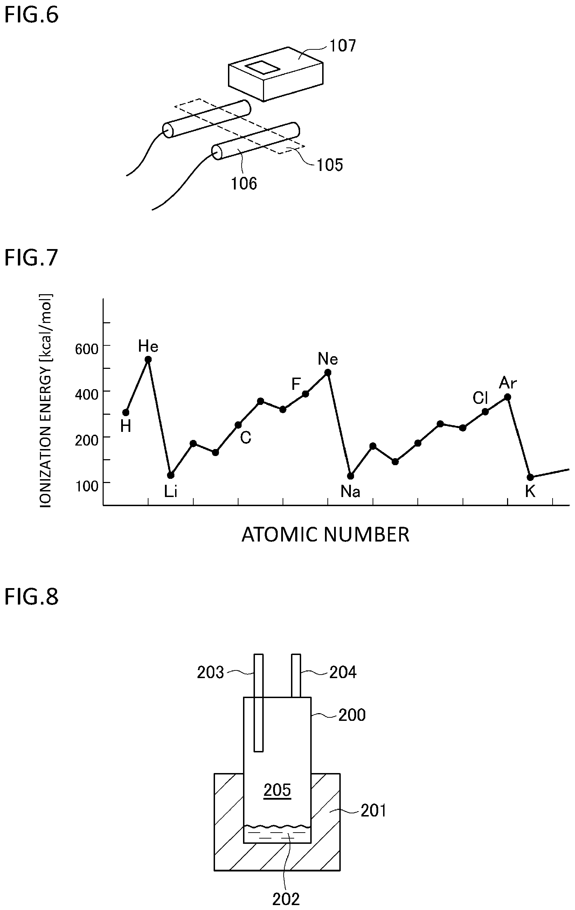

Figure 6 shows a measurement system in which various metal plates are put on two electric heaters 106 and 106 so as to measure strength of electromagnetic waves emitted from the plates with respect to the change of temperatures by a strength meter 107. The results are as follows.

| Material | average strength of electromagnetic waves |
|---|---|
| iron | $0.361$ mw/m$^2$ |
| carbon | $0.238$ mw/m$^2$ |
| copper | $0.118$ mw/m$^2$ |
| aluminum | $0.087$ mw/m$^2$ |
| stainless steel | $0.067$ mw/m$^2$ |

The result shows that iron can emit electromagnetic waves with the highest-strength.

4. Kind of Amplification Agent

The amplification agent 6 is material for amplifying energy of the electromagnetic waves, and there are two types of amplifications, that is, one is to increase number of electromagnetic waves (photon) and the other is to increase number of frequencies of electromagnetic waves.

The inventor has been repeating experiments for more than ten years. As a result, it is ascertained that hydrogen can be taken out of various gases, e.g., steam ($H_2O$), carbon dioxide ($CO_2$), nitrogen ($N_2$), argon (Ar) or helium (He). The following amplification agents are preferably put into a stainless reactor or an iron reactor.

    (a) only metal sodium (Na)
    (b) SUS or ion powders in addition to metal sodium
    (c) SUS (SUS304) and zinc powders in addition to sodium hydroxide (NaOH)
    (d) aluminum powders in addition to sodium hydroxide
    (e) SUS (SUS304) or iron powders in addition to potassium hydroxide
    (f) only calcium carbonate powders ($Ca_2CO_3$)
    (g) zinc or SUS powders in addition to sodium chloride
    (h) only aluminum powders

In this manner, according to the results of various experiments with respect to amplification agents, a single element with the following conditions or a combination of more than one single element seems suitable for the amplification agent.

    (1) agent which is easily ionized to generate cations and has a low ionization energy
    (2) agent which has functions to generate laser rays, to perform induction radiation and to amplify energy
    (3) agent which has a large number of electrons to be able to emit electromagnetic waves with a large number of frequencies such as X-ray
    (4) agent which can remove drawbacks of negative elements such as chlorine (Cl), fluorine (F), oxygen (O), etc.

Next, elements satisfying these conditions will now be considered. The elements that have surely the condition (1) are, as shown in Figure 7, alkali metals Li, Na, K, Rb, Cs and Fr belonging to the typical elements on the long periodic table. With respect to not only Na but also K, the fact that satisfies the condition (I) was confirmed by means of experiments. Further, Al is also active, and its ionization energy is small. In these high active elements, high-energy electromagnetic waves strike against not only electrons on the outermost orbit (shell) but also electrons on the inner orbits (shell) to make them jump out of those orbits, so that there is a high possibility that cations of +2 and +3 charges are generated. Further, Pt is desirable because it is used as an electrode of a fuel cell and has an ionization function even at a room temperature. Accordingly, Ni and Pd belonging to the same group on the periodic table satisfy the condition (I), also. Further, as stainless steel can be used as an electrode of a fuel cell, Cr or Fe seems to be able to be used as the amplification agent.

Elements Na, K, Cr, Al, etc., are enumerated, at present, as those to be in conformity with the condition (2). In addition, it seems that element Cu or Mg belonging to the typical element group on the long periodic table is also in conformity with the condition (2). Especially, Al has a large energy amplification function, and element Cu has also such a function in view of a characteristic feature of duralumin.

With respect to the condition (3), as elements which have a large number of electrons jumping over its orbits (quantum jump) and which belong to from the fourth cycle group to seven cycle group, K, Ca, Ti, Cr, Mo, Mn, Fe, Co, Ni, Cu, Zn, Mo, Pd, Ag, Sn, Pt, Au, Hg, Pb, Th, U, etc., are enumerated. Especially, Hg is vaporized at a low temperature, and Fe Ni, Cu, Zn and S are generally used. In the case that T, U and Pu are combined with fluorine (F), $ThF_4$, $UF_6$ and $PuF_6$ are generated, respectively, to be in form of gas at a room temperature. Those compounds emit electromagnetic waves by themselves to maintain the plasma space at a low temperature.

Next, the condition (4) will now be considered. In the case that $CO_2$ is treated in the plasma space, both ions of plus $C^{4+}$ ions (cation) and minus $O^{2-}$ ions (anion) are added to the plasma space, and, however, the minus $O^{2-}$ ions weaken a plasma reaction because they absorb electrons. In addition, also in the case that hydrogen is taken out of water, the minus $O^{2-}$ ions weaken the plasma reaction because of the same reason. Therefore, it is desirable that elements of Al, Zn, etc., are, as amplification agents, added to the plasma space.

From the viewpoint of practical use, it is desirable that such elements are found much on the earth to be obtained easily at a proper cost and do not cause environmental pollution. Therefore, Na, K and Al seem to be optional. The single alkali metal Na or K must be carefully used, and, instead, these hydroxides (NaOH, KOH) or chloride (Nacl) can be used. However, in the case of Nacl and KOH, a countermeasure is necessary against minus $O^{2-}$ion, and in the case of Nacl, a countermeasure is necessary against minus $Cl^{1-}$ ions. In order to remove their respective adverse effects, Al and Zn are preferably added to produce compounds $Al_2O_3$, $Z_nO$, $Al_2Cl_3$ and $Z_nCl_2$.

In order to increase energy of the plasma space, radioactive elements such as uranium (U), plutonium (Pu) and thorium (Th) can be used as the amplification agent. Fluorescences ($UF_6$, $ThF_4$, and $PuF_6$) of these elements are in form of gas, and can be flown in the reactor instead of solid amplification agents. In addition, in order to remove minus F ion, Hg and/or P may be added therein in form of gas because these elements are easily vaporized (Hg: evaporation point 356°C, P: evaporation point 280°C).

The inventor of this Application has tried various experiments for comparison many times in which a reactor 200 (made of SUS304) (diameter: 10cm, height: 30cm) is heated by a mantle heater 201 at its lower half portion while gases such as $CO_2$, nitrogen, argon, etc., are supplied into the reactor 200 from a supplying pipe 203 with various amplification agents being put at the bottom surface of the reactor 200 to measure the ingredients of gases discharged from a discharging pipe 204. The lowest temperature for generating hydrogen gas by the reactor 200 was approximately 200°C. That is, when sodium clumps of 80g and aluminum powder of 50g were put into the reactor 200 as amplification agent, and $CO_2$ was flown thereinto with a mantle heater 201 being preset at the temperature of 200°C and with the temperature of the plasma space 205 being approximately 100°C, the generation of hydrogen gas was observed by means of a mass analysis apparatus. This means that the plasma space seems to need a temperature above 100°C in order to give a momentum above predetermined value to each of the fine particles of the amplification agent 202.

5. Formation of Plasma Space

The plasma space 5 is formed in the following manner. Various materials can be used as the amplification agent 6 as mentioned above and, however, a case wherein single metal sodium is used as the optimal agent will now be explained.

1) First Step (Evaporation)

The plasma space 5 is, as shown in Figure 3, surrounded by the inner wall surface 1a on which a carbon layer 2 is formed, and some metal sodium in shape of clump are put on the carbon layer 2 of the bottom surface of the reactor 1. The metal sodium as the amplification agent is generally melted at a temperature under 100°C, and is evaporated in a short time by electromagnetic waves emitted from the carbon layer 2 and the inner wall surface 1a, both of which form a typical type of potential energy in quantum mechanics.

Namely, generally speaking, when a metal structure and carbon material, etc., are heated, those crystal lattices are oscillated by heat thereby to oscillate electrons in each element located in each crystal lattice. On the contrary, each element of the crystal lattices frees an electron ($e^-$) to be changed into an oscillating plus ion. The ions and both of free electrons and the remaining electrons in each element oscillate, and these oscillations are so-called charge oscillations thereby to emit electromagnetic waves.

Generally speaking, in the case that the inner surface wall 1a and the carbon layer 2 are simply heated at 300°C, microwaves with frequency of $10^{10}$ are emitted, and, on the contrary, in the case that they are heated at a temperature of 400°C to 500°C, far-infrared rays with frequency of $10^{11\text{-}12}$ are emitted. These electromagnetic waves are once absorbed in atoms in metal sodium to be amplified through an amplifying function of the metal sodium then to be emitted again from the atoms. In addition, when the metal sodium is directly heated, it itself emits electromagnetic waves which are amplified by other atoms in the neighborhood of them. The amplification agent in the reactor is heated partially at a high temperature to be evaporated in a short time, so that the evaporated fine particles (the first fine particles group) fly out in the reactor.

The fine particles fly out at a high speed in the reactor, and its flying speed is in proportion to the temperature of a flying space. Supposing that the mass of a sodium atom is "m", the average kinetic energy is as follows.

$$[\text{expression 1}]$$

$$\frac{1}{2}mv^2 = \frac{3}{2}KT$$

K: Boltzmann constant ($1.38 \times 10^{-23}$ $J/K$)
And the velocity of one sodium atom is as follows.

$$[\text{expression 2}]$$

$$m = the\ mass\ of\ hydrogen\ atom\ (1.67\ \times\ 10^{-27}kg)\ \times\ \frac{22.99(mass\ of\ Na)}{1.008(mass\ of\ H)}$$

$$= 3.8 \times 10^{-26}kg$$

$$[\text{expression 3}]$$

$$v = \frac{3kT}{m} = \sqrt{\frac{3 \times 1.38 \times 10^{-23} \times \text{T}}{3.8 \times 10^{-26}}} = \sqrt{1.1 \times 10^3 T} = 10 \times \sqrt{11T}$$

In the cases of 473K(200°C), 573K(300°C) and 673K(400°C), velocities (*v*) are approximately 720m/s, 800m/s and 860m/s, respectively. In the plasma space, the fine particles collide with each other to excite the plasma atmosphere. Therefore, in order to excite the plasma atmosphere, the plasma space must be maintained at a certain temperature. As mentioned above, the inventor could change $CO_2$ into hydrogen in the plasma space at 100°C. At that time, it seems that the sodium atoms moved at the speed of 630m/s.

2) Second Step (Ionization and Amplification)

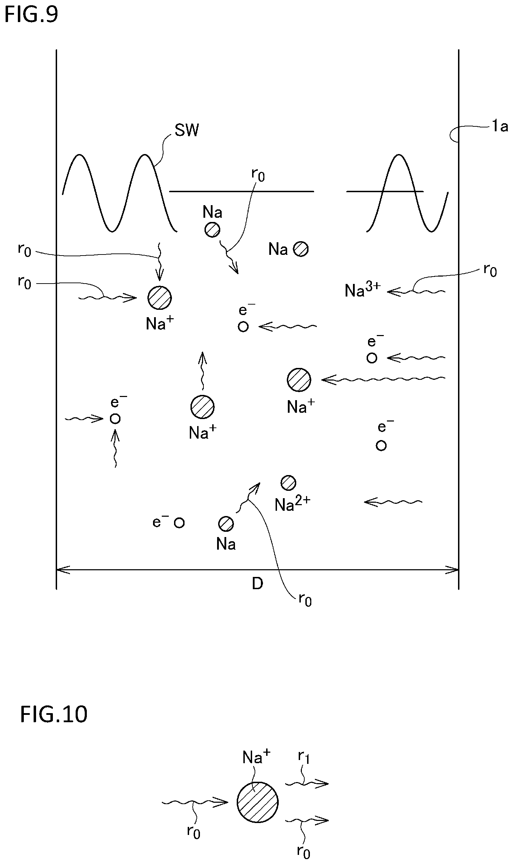

Next, in Figure 9, in the case that neutral fine particles (sodium atoms) which have not been ionized yet are flying fastly in the plasma space 5 which is maintained at a temperature of 200°C to 300°C, the sodium atoms are ionized by electromagnetic waves $r_0$, $r_0$, ... $r_0$ (standing waves ) emitted from the inner wall surface 1a and from other sodium atoms, so that one or more than one electrons fly out from the orbits of each atom in response to the energy-strength of an electromagnetic wave and the number of photons (the number of electromagnetic waves ) to generate a plurality of ions $Na^+$, $Na^{2+}$, $Na^{3+}$ ... $Na^{x+}$.

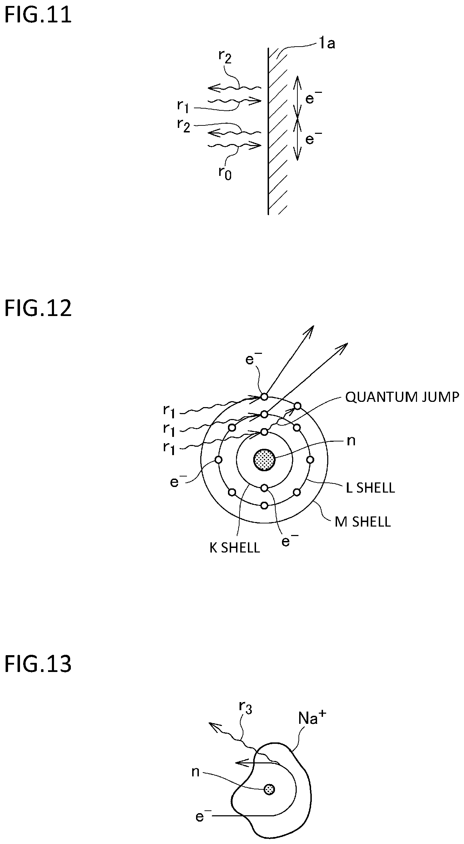

As shown in Figures 9 and 10, when one wave $r_0$ emitted from the inner wall surface is absorbed into a sodium ion $Na^+$, a new wave $r_1$ is stimulated and induced to be added to the original wave $r_0$, so that two waves are emitted. The amplified waves $r_0$ and $r_1$ emit four waves through a cooperative function with sodium atoms in their neighborhood. As shown in Figure 11, when one wave collides with the wall surface, it is absorbed thereinto to oscillate electrons located at the colliding point along the wall surface. The oscillation of the electrons generates reflection waves $r_2$ and $r_2$, and these operations are repeated at the speed of light.

Supposing that the diameter of the reactor is 10cm (in Figure 9), an electromagnetic wave goes back and forth 3 billion times in the reactor 1 while the electromagnetic wave cooperates with both of sodium ions $Na^{x+}$ and electrons ($e^-$) to emit a high-strength electromagnetic wave at a certain rate so as to generate a plasma-decay and a plasma-reunion at an uncertainty timing.

Further, ionization and amplification will now be explained in detail. The ionization is, as shown in Figure 12, a function to give an energy to an electron $e^-$ running along an orbit of a sodium atom to make it jump outside from the orbit (shell). Thus, the sodium atom is ionized to become a plus $Na^{x+}$ ion. Generally speaking, in the case of a sodium atom, an electron $e^-$ on the outermost M shell jumps easily outside from the shell M, and an electron $e^-$ jumps outside also from the inner L shell. In this manner, in the case that two electrons $e^-$ jump outside, a plus sodium ion $Na^{2+}$ (charge

+2) is produced. Further, in the case of an electromagnetic wave with a high-strength energy, an electron $e^-$ jumps outside from the K-shell. In the case that three electrons jump outside, a plus sodium ion $Na^{3+}$ (charge +3) is produced. These some ions (charge +1,2 and X), neutral atoms Na which are not ionized and electrons $e^-$ which jump out of atoms form the plasma space 5 (the second fine particles group). In this manner, the closed space 5 of the reactor has a plasma atmosphere, and in the plasma space 5, not only the sodium ions but also the electrons $e^-$ have an important function. That is, an electron $e^-$ flying at a high speed collides with a neutral sodium atom which is not ionized to make an electron $e^-$ in the atom jump out thereby to improve an ionizing function. In addition, the electron $e^-$ interacts with an electromagnetic wave to increase its frequency thereby to produce a high-energy electromagnetic wave. Furthermore, when an electromagnetic wave with a high energy collides with a sodium atom at the speed of $\frac{1}{10}$ light velocity, it enters the atom and turns at a sudden angle to generate a current in shape of pulse which generates often an electromagnetic wave $r_3$ in the range of X-rays (Figure 13).

As shown in Figure 12, in the case that an electron $e^-$ on K-shell of a sodium atom jumps to the outermost M-shell and returns back to the original K-shell, a highfrequency electromagnetic wave is sometimes produced because of a resonance effect of the electron on the K-shell.

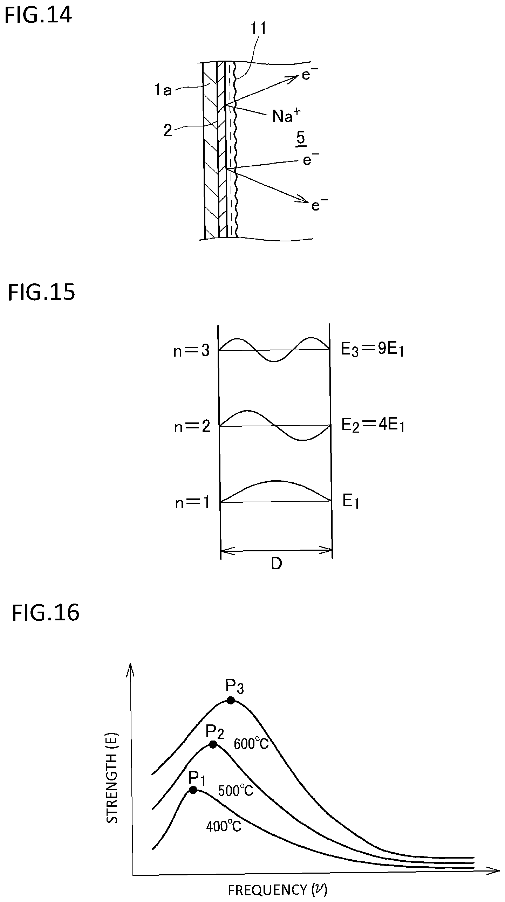

In this manner, the plasma space 5 has a great number of electrons because, as shown in Figure 14, there is a case that a high-speed electron ($e^-$) or sodium ion ($Na^+$) collides with the surface of the carbon layer 2 of the reactor 1 to knock out a secondary electron therefrom.

At that time, an electron is knocked out first from the surface of the carbon layer 2 because it is light and is easy to move to leave ions behind thereby to generate a charge imbalance layer 11 (sheath) because of imbalance in the numbers of plus and minus charges. As a result, the layer 11 has a potential gradient, and some heavy sodium ions $Na^+$ collide with the inner wall of the carbon layer to strike out secondary electrons $e^-$ therefrom thereby to increase the number of electrons in the plasma space 5.

3) Third Step (Plasma-Decay and Plasma-Reunion)

When electromagnetic waves with a large energy are emitted, each nuclear force of sodium ions ($Na^{x+}$) and sodium atoms (Na) in the second fine particles group is broken to cause a plasma-decay, so that protons (P), neutrons (n) and electrons ($e^-$) are newly generated separately to form a third fine particles group in which new protons (P), neutrons (n) and electrons ($e^-$) are mixed with fine particles in the second fine particles group. At this time, if a proton is reunited with an electron, hydrogen gas is produced, and there may be a reunion of one proton and one neutron. However, a reunion of two protons does not happen easily due to a repulsive force between two protons.

The phenomenon in which the nuclear force is broken to cause nucleons to be separated dispersedly from each other is called "plasma-decay" herein, while the phenomenon in which two nucleons in addition to reunion of one proton and one electron are reunited is called "plasma-reunion". Conventionally, the concept of fission means that a neutron collides with a nucleus to separate it into two or three new atoms, while fusion means that two protons or a proton and a neutron are united with each other. In the plasma-decay, the whole nucleus is separated into each nucleon, and in the plasma-reunion, two protons, two neutrons, a proton and a neutron or a proton and an electron are reunited with each other. This is a new concept which does not exist conventionally.

In the first, second and third steps, Ni powders, stainless steel powders, Zn powders or aluminum powders are used as an amplification agent, each atom (Ni, Cr, Fe, Zn or Al) and their ions ($Ni^{x+}$, $Cr^{x+}$, $Fe^{x+}$, $Zn^{x+}$ or $Al^{x+}$) as a new fine particles group are added to each original fine particles group. It is certified by various experiments that the fine particles of the new and original fine particles groups are evaporated even at the lowest temperature of 500°C because an extremely high exothermic reaction occurs partially on the fine particles.

In the case that NaOH or KOH is used as an amplification agent, the first fine particles group includes Na or K atom and O and H atoms, the second fine particles group includes $O^{x+}$ and $H^+$ (proton) ions in addition to the first fine particles group, and the third fine particles group includes protons (p), neutrons (n) and electrons ($e^-$) which are derived mainly from the plasma-decay of $O^{x+}$ ions.

The flying speeds of protons and neutrons after the plasma-decay can be calculated by the expression 1 mentioned before. In the case that influence of high-energy electromagnetic waves, is ignored, the flying speed of a proton or a neutron is 3300 m/s, 3800 m/s and 4100 m/s at 200°C, 300°C and 400°C, respectively. Electrons fly at much more high speed (more than 40 times that of protons or neutrons). In order to activate a plasma reaction, the plasma space must be maintained at a certain temperature.

4) Fourth Step (Treatment of Gas)

In the first, second and third steps, the behavior of the amplification agent is explained, and the plasma atmosphere is used for treating various gases such as poisonous gases. In the case of carbon dioxide ($CO_2$), it is gradually divided into C atoms and O atoms, and the ions ($C^{x+}$ and $O^{x+}$), protons (p), neutrons (n) and electrons ($e^-$) in addition to neutral atoms C and O which have not been divided yet are added to the third fine particles ($e^-$) group to form the fourth fine particles group. In the case of steam ($H_2O$), H atoms, $H^+$ ions (protons), O atoms, $O^{x+}$ ions, protons (p), neutrons (n) and electrons ($e^-$) are added thereto, and, in the case of nitrogen gas, N atoms, $N^{x+}$ ions, protons (p), neutrons (n) and electrons ($e^-$) are added.

6. Standing Wave

As mentioned above, a cylindrical shape of reactor 1 has an inner space with a potential energy in the shape of well in quantum mechanics and an electromagnetic wave emitted in the space forms a standing wave. In Figure 9, a generated standing wave SW goes back and forth across the plasma space while reflecting on two opposite walls 1a and 1a at the speed of light (300 thousand km/hour) . With respect to the standing wave, as shown in Figure 15, in the case that its half wave length equals to a diameter D between the two inner walls 1a and 1a, it is called a primary standing wave (n=1), in the case that its wave length equals to the diameter D, it is called a secondary standing wave (n=2), and in the case that its 1.5 (one and half) wave length equal to the diameter D, it is called a tertiary standing wave (n=3). As shown in Figure 16, when the reactor is heated, frequency (*v*) of electromagnetic wave is continuously generated at each heating temperature. That is, an order (n) exists continuously in a range ($1<n<\infty$), and, however, an energy E corresponding to each heating temperature at a certain order (n) which corresponds to a frequency is changed discontinuously in unit of *hv* (h: planch constant) in accordance with a principle of quantum dynamics.

When the wall surface 1a is heated at 600°C, for example, standing waves in range (e.g., frequency $10^{14}$) of infrared ray are emitted, the energy strength (number of photons) at that time is larger than those at 400°C and 500°C, and there are differences of integer multiple among them. Accordingly, the higher the heating temperature becomes, the larger strength of standing waves emitted becomes. In view of obtaining standing waves with a high-strength of energy, it is desirable that the heating temperature is high in a range without losing heat-resistance.

As mentioned before, in order to form a plasma space with a great number of electrons, in which generated standing waves go back and forth between two opposite wall surfaces, a state wherein electrons oscillate in the inner wall surfaces of the reactor must be maintained by preventing the formation of insulation oxide layers on the inner walls. In view of this, the carbon layer 2 (Figure 1) is desirable, and it has a sufficient heat-resistance.

7. Action of Plasma Space

1) Function of Standing Waves

When the amplification agent 6 is put into the main body of the reactor 1 which is then heated at e.g., 400°C, standing waves with frequency of around $10^{13}$ in the range of far-infrared ray are emitted. With respect to the energy of normal standing waves, a Schrödinger's wave equation can be adapted in the following manner. Supposing that $E_n$ means an energy of a quantum number (order) n (Figure 15), m means mass of a fine particle such as proton, neutron and electron, and D means the diameter of the reactor.

[expression 4]

$$E_n = \frac{h^2}{2m}\left(\frac{n\pi}{L}\right)^2 \ \dots \ (1)$$

Accordingly,

$$E_n = n^2 E_1 \ \dots \ (2)$$

That is, the energy $E_n$ of standing waves is in proportion to square value of the quantum number n. Generally, a wave motion energy $E$ is shown as follows.

$$E = hv \ \dots \ (3)$$

The energy $E$ of standing waves is in proportion to the square value of its quantum number (n) as mentioned above, and, accordingly, $E$ is also in proportion to the square value of its frequency. Therefore, the following equation is brought into existence.

$$E = hv^2 \quad ... \quad (4)$$

Accordingly, a standing wave with frequency of $10^{13}$ has the same energy as a normal electromagnetic wave with frequency of $10^{13 \times 2}$ which belongs to the range of $\gamma$-rays, and has an energy equivalent to a $\gamma$-ray to plasma-decay various ions flying around. Therefore, when such a standing wave equivalent to a $\gamma$-ray collides with the nucleus of each ion or passes in its neighborhood, it cuts the nuclear force of the nucleus to decay in plasma the nucleus thereby to separate protons from neutrons. However, the generation of a powerful standing wave and its collision with each ion happen at a certain rate to decay each ion gradually while protons as plus ions (H$^+$) fly around so as to reunite with electrons (e$^-$) thereby to form hydrogen gas (H$_2$). In addition, a neutron is changed into a proton through $\beta$-decay after 10 minutes or so from the time when it is separated from the proton, so that it can be taken out of the reactor in shape of hydrogen.

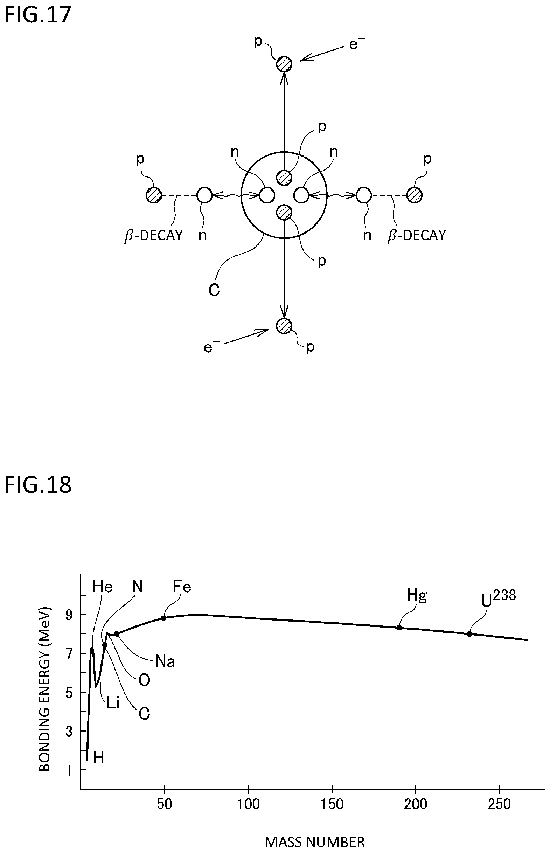

In this manner, in the case that Na is used as the amplification agent, a plasma-decay of the agent occurs in the plasma space at a temperature above 300°C to begin to generate hydrogen first, and, thereafter, when a heating temperature is increased to a temperature around 600°C, one kind of gases such as $N_2$, $H_2O$, $CO_2$, Ar and He is supplied into the reactor to generate hydrogen little by little from the gas to be treated. Figure 17 shows a state of plasma-decay of He wherein two protons in P and P in a nucleus C are dispersed at a time of breakage of nuclear power in the opposite directions because of a repulsive force while two neutrons n and n float there without the repulsive force to be changed into two protons in a short time.

2) Energy of Plasma

As mentioned above, in the plasma space, a large energy is produced by the following functions in which a plurality of standing waves are emitted from the wall surface of the reactor, the energy of each standing wave is amplified by means of the characteristic feature of the fine particles to produce a laser ray (the number of photons is increased), and some electromagnetic waves with a great number of frequencies are emitted through a function (cooperation between electromagnetic waves and electrons) of high-speed electrons. Therefore, ions and fine atoms in the plasma space are decayed in plasma, and fine atoms in steam, nitrogen, $CO_2$, etc., to be treated are also decayed in plasma. Such a plasma-decay necessitates a certain energy larger than a bonding energy of each atom as shown in Figure 18 which shows the bonding energies in response to various atoms. Each atom has a different mass number, and a bonding energy per one nucleon of each atom by its mass number makes a total nuclear force of each atom. Concerning energy for plasma-decay of each atom, the inventor has an opinion that energy of each electromagnetic wave (number of photons) must be larger than a bonding energy per one nucleon. In addition to this, total number of electromagnetic waves must exceed a total nuclear force per one atom (a bonding energy per one nucleon X mass number). Accordingly, each of electromagnetic waves for the plasma-decay must have a frequency more than a predetermined value. Nuclear force is secondary derived from a tensile force of gluon. In order to cut function of gluon, one photon must have an energy larger than that of one gluon (one gluon corresponds to one nucleon).

3) Uncertainty of Energy Generation

An energy is generated in a plasma atmosphere at a certain rate on the basis of "Uncertainty principle of Heidelberg", and is not generated continuously. That is, the relation between the uncertainty ($\Delta E$) of energy generation and the uncertainty ($\Delta T$) of its generation period is as follows.

[expression 5]

$$\Delta E \times \Delta T \geqq \frac{\hbar}{2} \quad \cdots \quad (5)$$

For example, in the case of an electromagnetic wave having frequency of $10^{15}$, its uncertainty ($\Delta T$) is as follows.

[expression 6]

$$h \times 10^{15}(v) \times \Delta T \geqq \frac{\hbar}{2} \cdots \; (6)$$

[expression 7]

$$\Delta T \geqq \frac{\hbar}{2} \div (h \times 10^{15}) \rightarrow 8 \times 10^{-17} second \; \cdots \; (7)$$

That is, in time period of $8 \times 10^{-17}$ second, there is a possibility that an energy corresponding to frequency of $10^{15}$ can be generated. If an electromagnetic wave generated at that time is a standing wave, its energy increases in proportion to square its frequency. Accordingly, the energy of the standing wave is as follows.

$$E = hv^2 = planch\; constant \times \text{frequency} = 6.626 \times 10^{-34} \times 10^{15 \times 2}$$

$$= 6.626 \times 10^{-4} J (\text{joule})$$

The above energy of $6.626 \times 10^{-4}$J per one photon can be generated in an extremely short time.

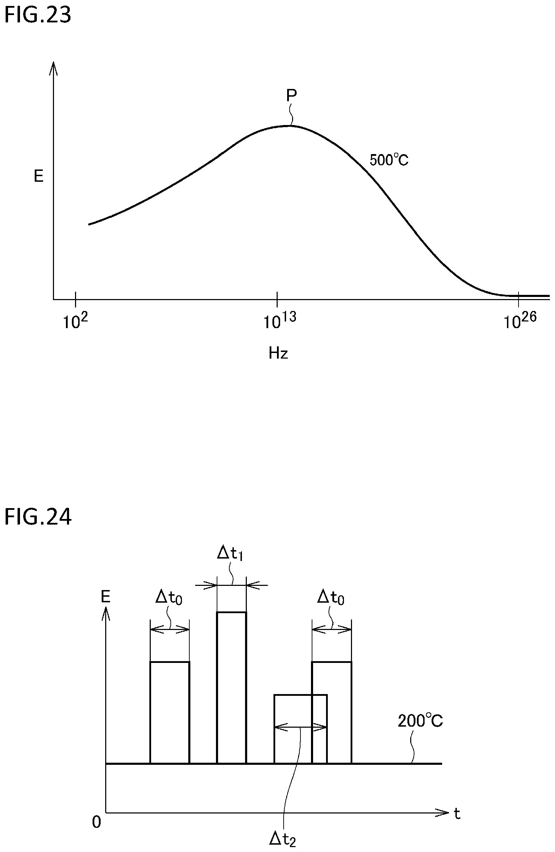

As shown in Figure 24, a plasma-decay occurs at a time when a high energy is generated to cause an endothermic reaction, and, in addition to the reaction, a plasma-reunion occurs to cause reunions between one proton and one neutron and between two neutrons. When a high energy is generated in a short time ($\Delta T_0$, $\Delta T_1$ and $\Delta T_2$) intermittently, a plasma-decay occurs again.

In this manner, as the generation of a high energy (exothermic reaction) and generation of the absorption of the high energy (endothermic reaction) by the plasma-decay occur alternately, the reactor is not broken. When a certain gas e.g., nitrogen is fed into the reactor, the nitrogen gas is decayed in plasma at an uncertainty timing to be gradually transformed into hydrogen. At this time, the generated high-energy electromagnetic wave disappears after a time ($\Delta T$), and, accordingly, it is not emitted outside of the reactor irrespective of its speed of light. Nitrogen has a bonding energy per one nucleon of approximately 7.5 MeV (Figure 18) which corresponds to $1.2 \times 10^{-12}$J, and, as one atom of nitrogen has 14 nucleons, its total bonding energy is as follows.

$$1.2 \times 14 \times 10^{-12} J \rightarrow 1.68 \times 10^{-11} J$$

A bonding energy per one nucleus is $E = hv = 1.2 \times 10^{-12}$J, and, accordingly, the frequency $v$ is ;

$$v = 1.2 \times 10^{-12}/6.626 \times 10^{-34} \rightarrow 1.8 \times 10^{21}$$

Namely, one photon with the frequency of $1.8 \times 10^{21}$ is necessary per one nucleon, and, in addition to this, 14 photons are necessary. In the case of a standing wave, one photon corresponds to the following frequency.

[expression 8]

$$\sqrt{1.8 \times 10^{21}} = 10^{10}\sqrt{18} \rightarrow 10^{10} \times 3\sqrt{2}$$

An electromagnetic wave having frequency of $10^{10} \times 3\sqrt{2}$ (in the range of microwaves) can decay in plasma one nucleon of nitrogen and more than 14 photons of the wave can decay in plasma one atom of nitrogen.

A large strength of electromagnetic wave is generated at a period less than $\Delta T$, and a plasma-reunion is generated in addition to a plasma-decay.

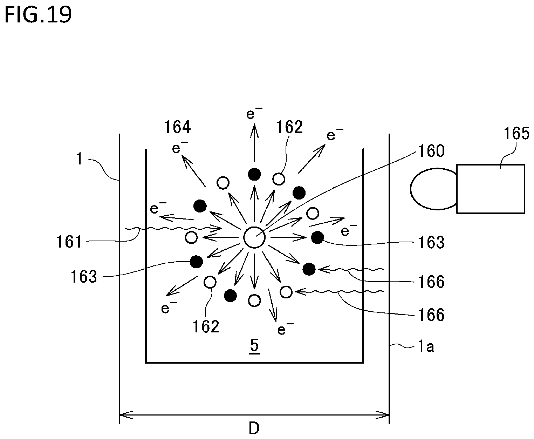

In Figure 19, in the case that a standing wave 161 having an energy which is larger than nuclear force of nitrogen atom is emitted in a plasma space 5 to collide with a nitrogen atom, the nitrogen atom is decayed in plasma to be separated into 7 protons, 7 neutrons and 7 electrons. At this time, an endothermic reaction is generated corresponding to the nuclear force of the nitrogen atom to absorb the energy of the standing wave 16. This results in no damage against the reactor 1. In a plasma-decay, a plurality of protons 162 fly out in various directions due to their repulsive forces while a plurality of neutrons 163 move at a low speed in the plasma space because of no repulsive forces due to no charges, and, however, each neutron obtains only a momentum so as not to pass through the wall of the reactor 1. A neutron measurement device 165 has been disposed adjacent to the reactor 1 during experiments. However, the device 165 never detected the neutrons 163.

Supposing that a plurality of other electromagnetic waves 166, 166 ... 166, each having a large energy collide with protons 162 and neutrons 163, there may be a possibility that two nucleons are reunited with each other to make one unit thereby to generate 7 plasma-reunions. At this time, three kinds of unites, that is, the unit of two protons, the unit of two neutrons may be generated. However, the possibility of the unit of two protons is extremely low because a nuclear force acts on two protons within the distance of $5 \times 10^{-15}$m. In order to make two protons come close to the position of $5 \times 10^{-15}$m, each proton must have a momentum more than a repulsive force between them. Each proton seldom has such a momentum. However, the unit of one neutron and one proton and the unit of two neutrons have a higher possibility than that of the unit of two protons because of no repulsive forces. Plasma-reunion is not necessarily generated from a plasma-decay of one atom. However, in the third and fourth fine particles groups, there are a countless number of nucleuses. Therefore, there may be a probability that a small number of plasma-reunions are generated to cause an exothermic reaction. If the number of plasma-reunions is increased, heat can be taken out of the plasma space 5. In order to increase the number of plasma-reunions, for example, some neutrons from a neutron source or hydrogen (H) from outside are supplied into the reactor 1 to increase the probability of plasma-reunion. When hydrogen is used as a substance for increasing the number of plasma-reunions, hydrogen atoms are ionized to separate an electron from a nucleus (proton). At that time, an endothermic reaction is generated to decrease the power of the plasma space 5. However, the exothermic reactions by the plasma-reunion of protons and neutrons can compensate sufficiently the endothermic reaction by the ionization of hydrogen. As a whole, the power of the plasma atmosphere is not decreased.

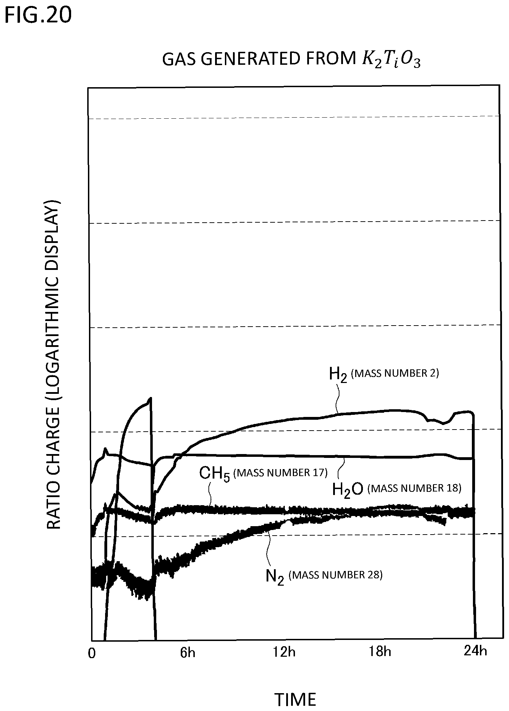

In the above case, when nitrogen gas is supplied into the reactor 1, and oxidation is not a problem. In the case that steam ($H_2O$) is supplied into the reactor 5, as soon as it is supplied thereinto, it is separated into the atoms O and H. However, a plasma-decay does not instantly occur with respect to all atoms, and a part of oxygens which are not decayed in plasma oxidize with the fine particles of the amplification agent to generate some solid oxides ($Na_2O$, $NaO$) which are adhered to the wall surface 1a to obstruct the generation of electromagnetic waves. However, the oxides are gradually decayed in the plasma space 5 to emit protons, neutrons and electrons separately. With respect to the plasma-decay of oxides, the following experiment was performed. Only potassium titanate was put in the experimental reactor shown in Figure 8, and the reactor was heated at 600°C. At that time, it was certified that hydrogen gas and water were generated from a fine particle corresponding to the third fine particles group for a long time. That is, the oxide had the same function as that of the amplification agent to generate fine particles corresponding to the third fine particles group. In Figure 8, only potassium titanate 202 was put into a stainless reactor 200 which was heated by a mantle heater 201, and gases to be detected were discharged from a discharging pipe 204. In Figure 20, it was judged that mass number 17 generated in the reactor 200 might be $CH_4$ gas.

5) Energy and Action of Plasma Space

On the basis of the results of various experiments, the largeness of an energy generated in the plasma space 5 and the action thereof will now be calculated, and the results of the experiments will now be analyzed.

a) Experiment A

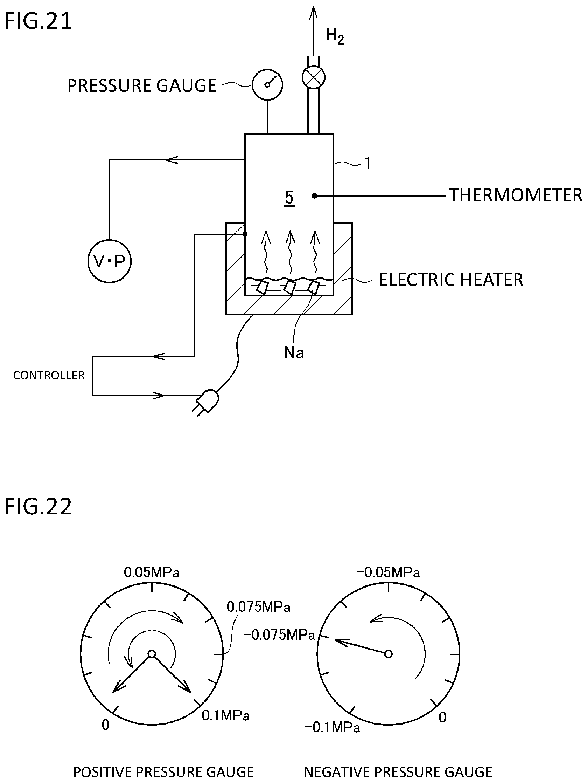

First, metal sodium of 50g in shape of lump was supplied into a stainless steel reactor of SUS304 (diameter 10cm, height 20cm and plasma space 1570cc), the half lower part of the reactor was covered with an electric heater (Figure 21). A vacuum pump (V.P) made a vacuum (-0.1Mpa) in the reactor, and, thereafter, the reactor was heated until approximately 400°C. At that time, a pressure gauge pointed to a positive pressure (above 0 Pa), and when it pointed to +0.75 Mpa at 500°C, its pressure was released. Released gas was analyzed by a mass analysis device, and it was confirmed that the gas was hydrogen gas ($H_2$) (Figure 22). The above temperatures of 400°C and 500°C were preset temperatures, and the temperatures of the plasma space in both cases were approximately half of each preset temperature.

(b) Analysis

As there were no hydrogen atoms in the reactor at the beginning, and, thereafter, hydrogen was detected, it is obliged to think that the hydrogen was derived from a plasma-decay of the metal sodium. The bonding energy of metal sodium per one nucleon is approximately 8 MeV (Figure 18). This value corresponds to $1.28 \times 10^{-12}$ joule (J) as mentioned below.

$$8 \times 10^6 (eV) \times 1.6 \times 10^{-19} (C) \rightarrow 1.28 \times 10^{-12} (J)$$

One sodium atom has 23 nucleons, and, accordingly, the nuclear force of sodium atom is as follows.

$$1.28 \times 10^{-12} \times 23 \rightarrow 2.9 \times 10^{-11} J \quad \cdots (8)$$

In order to decay the nucleus of sodium atom to obtain hydrogen therefrom, an energy more than such a nuclear force is necessary. When a nucleus is decayed, electrons around the nucleus are dispersed because it loses its tensile force while some protons separated from the nucleus are reunited with the electrons in their neighborhood to generate some hydrogen atoms, and it is supposed that the remaining protons fly out freely.

At this time, neutrons are retaining in the reactor and are $\beta$-decayed to be transformed into protons approximately 10 minutes after the decay.

An energy for decaying a nucleus of sodium is more than 2.9 × 10⁻¹¹J according to the expression 8, and a frequency of electromagnetic wave corresponding to the energy is calculated as follows.
From the expression (1),

$$\gamma = E/h$$

Accordingly,

$$\gamma = 2.9 \times 10^{-11} J / 6.6 \times 10^{-34} J.S \fallingdotseq 4.4 \times 10^{22} H_z \quad \cdots (8a)$$

Namely, an electromagnetic wave having a frequency in the range of $\gamma$-rays can decay in plasma a sodium nucleus. Such a ray corresponding to a $\gamma$-ray is generated at a timing calculated on the basis of "Principe of Heisenberg". That is, a relationship between uncertainty ($\Delta$E) of energy strength and uncertainty ($\Delta$t) of generating period of time is as follows.

$$\Delta t \cdot \Delta E \geqq \hbar/2$$

$$\therefore \Delta t \geqq \frac{\hbar}{\Delta E \times 2} = \frac{1.054 \times 10^{-34}}{2.9 \times 10^{-11} \times 2}$$

The conclusion is:

$$\Delta t \geqq 1.81 \times 10^{-24} second \quad \cdots (9)$$

This means that the generation of $\Delta$E occurs at the time period of $\Delta$t, and the larger $\Delta$E becomes, the shorter $\Delta$t becomes.

In the experiment A, new hydrogen was generated from the state of vacuum, and, then, the pressure of the plasma space was increased to 0.075 Mpa at 500°C. That is, the pressure of 0.175Mpa was increased from the state of vacuum and the volume of the plasma space was 1750cc. Therefore, the amount of hydrogen generation was:

$$1750(cc) \times 1.75(\text{atmospheric pressure}) \fallingdotseq 3000\text{cc} (3l) \quad \cdots (10)$$

The number of hydrogen molecules ($H_2$) was:

$$6 \times 10^{23} \times \frac{3(l)}{22.41} = 8 \times 10^{22} \quad (\text{number of molecules}) \quad \cdots (11)$$

The number of atoms is twice of that of molecules (1.6 × 10²³), and one sodium nucleus has 11 protons. Therefore, the following number of sodium atoms were decayed in plasma.

$$1.6 \times \frac{10^{23}}{11} = 1.45 \times 10^{22} \qquad \cdots \quad (12)$$

Sodium of 50g was put into the reactor, and, therefore, if total amount of sodium is decayed in plasma, hydrogen of 5351 can be theoretically obtained. However, hydrogen of 31 was actually obtained, that is, sodium of 0.3g was consumed.

A high-strength electromagnetic wave is generated not only in the case that its standing wave collides with a sodium atom but also in the case that a normal wave collides with a sodium atom having an amplification function. In the case of standing wave, even a far-infrared ray (frequency of $10^{13}$ Hz) generated from the inner wall, as referred to the expression 4, can decay in plasma a sodium atom through its collision.

A high-strength electromagnetic wave for the plasma-decay of sodium atom is generated in a short time as mentioned above to be absorbed by the plasma-decay of sodium atom. Further, an electromagnetic wave moves at a speed of light, and its time period of generation is extremely short ($1.81 \times 10^{-24}$ second as referred to the expression 9. The travel distance of the electromagnetic wave is $3 \times 10^{-16}$m (less than nanometer) and, accordingly, the wave does not go out of the reactor. Further, the surroundings of the high-strength wave become a high temperature. However, some sodium atoms are instantly decayed in plasma to cause an endothermic reaction due to the plasma-decay of sodium atoms to prevent the reactor from being broken. At this time, each of the neutrons can move freely after the nuclear force of sodium nucleus is cut. At this time, the neutron does not obtain a large kinetic energy because there is no cooperative action with a proton. Each neutron is stagnant and is then $\beta$-decayed to be changed into a proton.

Further, a normal electromagnetic wave (not a standing wave) obtains a high-strength due to the amplification function of sodium atoms. When a far-infrared ray (frequency of $10^{13}$) emitted from the wall surface collides with a sodium atom before reaching the opposite wall surface and also in the case that an electromagnetic wave coming out of a sodium atom collides with one of other sodium atoms, the sodium atom amplifies the energy of the ray through an induction radiation. In the case of the induction radiation, in order to decay in plasma a sodium atom, the far-infrared ray must collide with a plurality of sodium atoms many times to get a high-strength energy. The number of times of collisions for plasma-decay is calculated in the following manner. Here, one collision makes twice energy, the frequency of far-infrared ray is approximately $10^{13}$ Hz, and its nucleus decay of frequency is $4.4 \times 10^{22}$ referring to the expression 8a. Accordingly, the necessary number (X) of collisions is:

$$2^x \times 10^{13} = 4.4 \times 10^{22} \quad \cdots \quad (13)$$

$$X = 32$$

In conclusion, 32 collisions of a far-infrared ray and a sodium atom can make an energy for plasma-decay for a sodium atom.

When the reactor is heated at 500°C, as shown in Figure 23, numberless electromagnetic waves each having a different frequency from $10^2$Hz to $10^{26}$Hz are emitted, and the wave with the frequency of $10^{13}$Hz (far-infrared ray) has the largest energy to form a peek P. Waves having frequencies more than $10^{13}$ Hz gradually decrease in its number, and waves in the range of $\gamma$-rays are remarkably few. In this manner, simple heating of reactor wall surface can hardly emit an electromagnetic wave for plasma-decay without standing waves and an amplification agent with a characteristic feature for producing laser rays.

Next, with respect to phenomena concerning the experiment A, functions of the plasma space 5 are concluded in the following manner. The plasma space 5 comprises sodium ions ($Na^+$, $Na^{2+}$ ... $Na^{x+}$), neutral sodium atoms (Na) not ionized and electrons ($e^-$) coming out of the ions and the inner wall surface of the reactor to form a mixture. Electromagnetic waves with various frequencies are emitted from the inner wall, sodium ions and neutral sodium atoms. Among these waves, standing waves emitted from the inner wall with frequencies more than those of far-infrared rays and high-energy electromagnetic waves amplified by sodium ions and neutral sodium atoms are emitted in the reactor at random to decay in plasma fine particles surrounding the electromagnetic waves to cause an endothermic reaction. Thus, those high-energy waves disappear, and these actions are repeated. This state is shown in Figure 24. An energy for decaying a sodium atom ($2.9 \times 10^{-11}$J as referred to the expression 8a) is generated for e.g., $1.81 \times 10^{-24}$ second ($\Delta t_0$), and, succeedingly, a high energy is generated for a shorter period ($\Delta t_1$). After that, the higher energy disappears. Thereafter, an energy less than a decay energy is generated for a period ($\Delta t_2$) and then disappears. Further, an energy more than that of decay is generated for a period ($\Delta t_0$). These two periods ($\Delta t_2 > \Delta t_3$) overlaps.

(C) Experiment B

When $CO_2$ of 1570cc was newly fed into the reactor so that as shown in Figure 22, until the indicator of a positive pressure gauge indicated the position of 0.1 Mpa, the indicator rotated left instantly to stop at the position of -0.07Mpa of a negative pressure gauge after 3 or 4 minutes. By the way, when the temperature of the reactor was a value from 400°C to 600°C, the temperature of the plasma space was a value from 200°C to 300°C. This experiment was repeated several times, the inventor certified its reproducibility. That is, after $CO_2$ was fed into the reactor, gas in the reactor was discharged therefrom before the inside of the reactor became a vacuum to detect the gas by means of a mass analysis machine. This fact means that $CO_2$ of 1570cc disappeared completely in positive pressure, and gas (hydrogen) of 1099cc corresponding to 70% of 1570cc disappeared in negative pressure. That is, gas (hydrogen) of total amount of 2669cc disappeared. In addition, the controller of the electric heater was preset at 600°C, and if temperature of the reactor goes over 600°C, supply of electricity is stopped. However, when $CO_2$ was fed into the reactor, as soon as $CO_2$ was fed, its temperature went up to 630°C (indication of controller) within a time of 5 to 6 seconds, and, then, its temperature lowered until 600°C within 2 or 3 minutes. By the way, at that time, the temperature of the plasma space went up and down in the same manner as that of controller.

Analysis of Experiment B

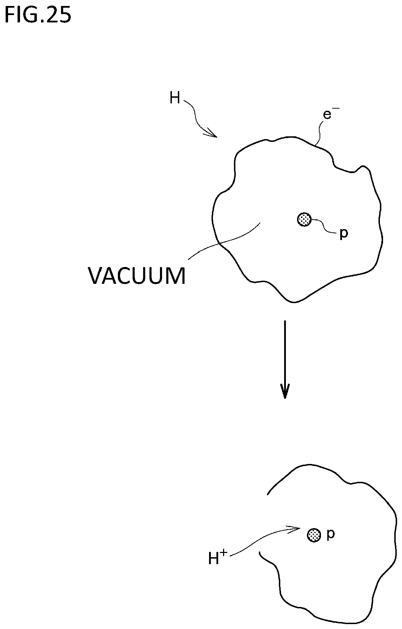

When $CO_2$ is fed into the plasma space, a chemical bonding of C atom(solid) and O atom(gas) is separated into C and O which are gradually decayed in plasma to be transformed into protons, neutrons and electrons, each of which has hardly volume, so that the pressure of the plasma space went down to be the state of negative pressure in a short time. At this time, there might be a case that a proton and an electron were reunited with each other. However, new hydrogen was ionized instantly so that a vacuum was made in the plasma space (Figure 25).
Before $CO_2$ was fed into the reactor, hydrogen of 1570cc existed in the reactor, and, thereafter, $CO_2$ of 1570cc was further fed thereinto, so that a mixed gas of O and H (C in solid), having a total volume of 3140cc went up by 30°C. The energy corresponding to the rise of 30°C is as follows. Constant volume molar specific heat is approximately 20.7 with respect to each of O and H.

$$20.7 \left( \frac{J}{mol \cdot K} \right) \times \frac{3.14}{22.4l} \times 30(°C) = 87J \quad \cdots \quad (14)$$

What such energy is derived from is not clear, and, however, it is possibly derived from a union of proton and electron after the plasma-decay or from the plasma-reunions of two protons, two neutrons or a proton and a neutron. Judging from largeness of its energy, the possibility of some plasma-reunions is high.
The number of plasma-reunion is calculated in the following manner. $CO_2$ of 1570cc was decayed in plasma and hydrogen of 1099cc (1570cc $\times$ 0.7) was ionized to be transformed into protons.
Here:

Number of molecules of $CO_2$

$$= 6 \times 10^{23} \times \frac{1.57}{22.4} = 0.42 \times 10^{23}$$

Number of atoms of C

$$= 0.42 \times 10^{23}$$

Number of atoms of O

$$= 0.42 \times 2 \times 10^{23} = 0.84 \times 10^{23}$$

Number of nucleons of C

$$= 0.42 \times 12 \times 10^{23} = 5.04 \times 10^{23}$$

Number of nucleons of O

$$= 0.84 \times 10^{23} \times 16 = 13.44 \times 10^{23}$$

Accordingly, number of nucleons of $CO_2$ decayed in plasma was $18.48 \times 10^{23}$. In addition, number of protons of hydrogen of 1099cc is:

$$6 \times 10^{23} \times \frac{1.0991}{22.41} \doteqdot 0.29 \times 10^{23}$$

and total number of nucleons of $CO_2$ and $H_2$ becomes $18.77 \times 10^{23}$. In these nucleons, most of combinations are that of a proton and a neutron. Ignoring other combinations, one combination of a proton and a neutron has the bonding energy of 1,11 MeV, as shown in Figure 18, which corresponds to a value mentioned below.

$$1.11 \times 10^{6} \times 1.6 \times 10^{-19} = 1.78 \times 10^{-13} J \qquad \cdots \ (15)$$

How many combinations make the value of 87J as referred to the expression 14 can be calculated in the following manner.

$$87 \div (1.78 \times 10^{-13}) = 48.9 \times 10^{13} = 4.89 \times 10^{14} \ \text{(combinations)}$$

The number of these combinations has the following ratio to total number of nucleuses of $CO_2$ and $H_2$.

$$4.89 \times 10^{14} : 18.77 \times 10^{23} = 1 : 3.84 \times 10^{9} \qquad \cdots \ (16)$$

The ratio is very low.

(e) Experiment C

Carbon of 100g and sodium of 50g in shape of stick were supplied into the experimental reactor 1 as shown in Figure 2, and, further, the bottom of the reactor 1 was heated at 600°C. At this time, the indication of a negative pressure gauge hardly rotated. Generation of gas was not observed. Then, $CO_2$ was fed thereinto from -0.1 Mpa (the negative pressure gauge) until +0.1 Mpa (the positive pressure gauge) to rotate the indicator reversely (left rotation), so that the indicator reaches at -0.1 Mpa in the negative pressure gauge in 1 to 2 minutes. At this time, a thermometer of the controller went up to 650°C. That is, volume of $CO_2$ corresponding to twice volumes (1570cc × 2 = 3140cc) of the reactor 1 disappeared, and temperature at the bottom of the reactor 1 went up by 50°C.

(f) Analysis of Experiment C

It was proved that heat was generated by a plasma-reunion after a plasma-decay. However, there is a small difference between the experiments B and C. In the experiment C, carbon(c) was added to sodium (Na), and this addition of carbon increased a function for obstructing reunion of protons, neutrons or electrons after the plasma-decay or a function for separating them instantly after the reunion, so that protons, neutrons and electrons were separately remained in a state wherein they had hardly a volume as if they disappeared.

8. Application of Plasma Space

1) Application as Heat Source

As mentioned above, when the reactor was heated at a temperature of 400°C to 600°C, the plasma space had a temperature of 200°C to 300°C. If a plasma-reunion is generated so as to raise temperature of the plasma space to a temperature of 600°C to 700°C while calorie corresponding to temperature difference of 400°C is taken out, the plasma space is maintained at a temperature of 200°C to 300°C while the plasma reaction is also maintained. In the case of the experiment B, 87J(joule) were necessary for raising temperature of the plasma space by 30°C. Therefore, in order to raise it by 400°C, the following energy is necessary.

$$87J \times \frac{400°C}{30°C} \doteqdot 1160J \qquad \cdots \ (17)$$

one combination (deuterium) of a proton and a neutron has the energy of $1.78 \times 10^{-13}$J as referred to the expression 15, and therefore, a necessary number of plasma-reunions for the rise of 400°C is as follows.

$$1160J/1.78 \times 10^{-13}J = 6.6 \times 10^{15} \ \text{(combinations)} \qquad \cdots \ (18)$$

The ratio of plasma-reunion is $1/3.84 \times 10^9$, and, therefore, necessary number of combinations is

$$6.6 \times 10^{15} \times 3.84 \times 10^9 = 25.3 \times 10^{24} \ \text{(combinations)} \qquad \cdots \ (19)$$

This number corresponds to hydrogen gas of 9411 which is not practically supplied into such a small reactor.

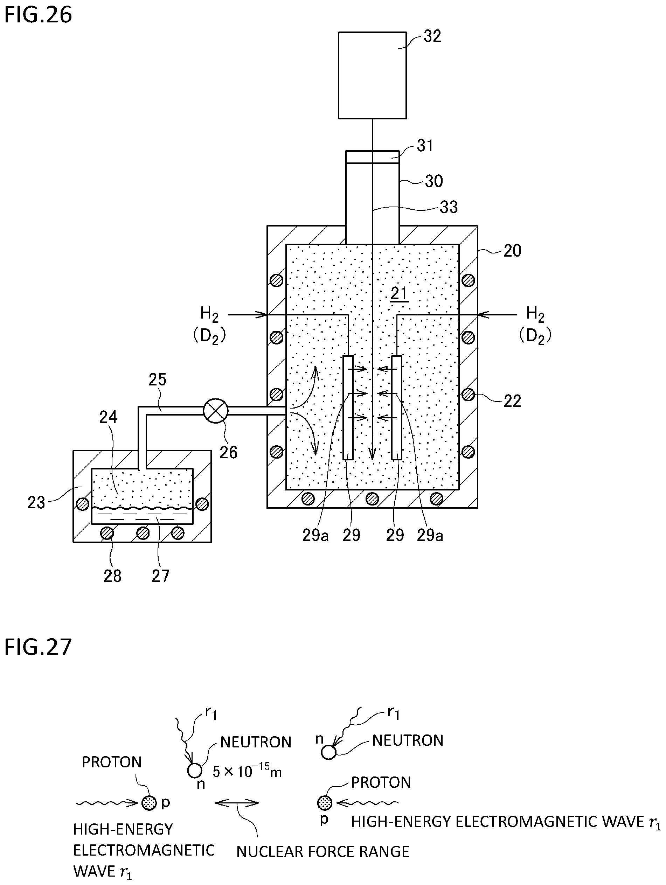

Therefore, as shown in Figure 26, a plasma space 21 is formed in a heated reactor 20 to be maintained, by an electric heater 22, at a temperature of 200°C to 300°C. A vaporizing furnace 23 is disposed separately from the reactor 20 to produce a plasma mixture 24 which is fed into the reactor 20. The amount of the mixture to be fed into the reactor 20 is adjusted by a valve 26 on a feeding pipe 25. An amplification agent 27 such as metal sodium is put onto the bottom surface of the vaporizing furnace 23 which is heated, by an electric heater 28, at a temperature of 600°C to 700°C.

In the plasma space 21 of the reactor 200, hydrogen gas for the plasma-reunion is ejected through a plurality of ejecting pipes 29a and 29a which are vertically disposed, in an opposed manner, at a predetermined interval of distance. Each of the ejecting pipes 29 has a plurality of ejecting nozzles 29a, 29a ... 29a opposed to each other. Pressurized hydrogen (10 atmospheric pressures) from opposed ejecting nozzles 29a and 29a collide with each other. As shown in Figure 27, the atom diameter of hydrogen is $10^{-4}$cm. In order to unite two nucleons with each other, the distance between two nucleons must be less than $0.5 \times 10^{-12}$cm at which a nuclear force acts on the nucleons. At this time, a great number of electromagnetic waves $r_1$, $r_1$ ... $r_1$ which are generated in the plasma space collide with hydrogen atoms to separate them into their nucleus and electrons thereby to expose protons to other fine particles (ionization). Therefore, high-strength energy electromagnetic waves act directly on the protons and also neutrons in the neighborhood to reunite protons(P) with neutrons(n). Reunion of two protons has a low possibility, and reunion of a proton and a neutron has a higher possibility than that of two protons. In addition, at that time, neutrons (n) have been already produced by means of plasma-decay of sodium and exist in the plasma space. Accordingly, the supplement of neutrons(n) is not necessary. However, neutrons(n) may be supplemented with deuterium gas ($D_2$) instead of hydrogen gas.

On the upper wall of the reactor 20 is provided a laser guide cylinder 30 for guiding laser rays which has a transparent plate 31 through which a laser ray transmitted from a laser transmitter 32 passes and goes down between the opposed hydrogen ejecting pipes 29 to promote reunions of neutrons existing between the two pipes 29 and protons ejected from the pipes 29. Such a system can increase remarkably a rate of plasma-reunion. The ratio of the plasma-reunion is adjusted by controlling the pressure and amount of gas fed to the pipes 29. In the case that the temperature of the plasma space is adjusted so as to be maintained at a temperature of 600°C to 700°C, even if calorie corresponding to the difference of temperatures of 400°C is taken out, the plasma space is maintained at a temperature of 200°C to 300°C.

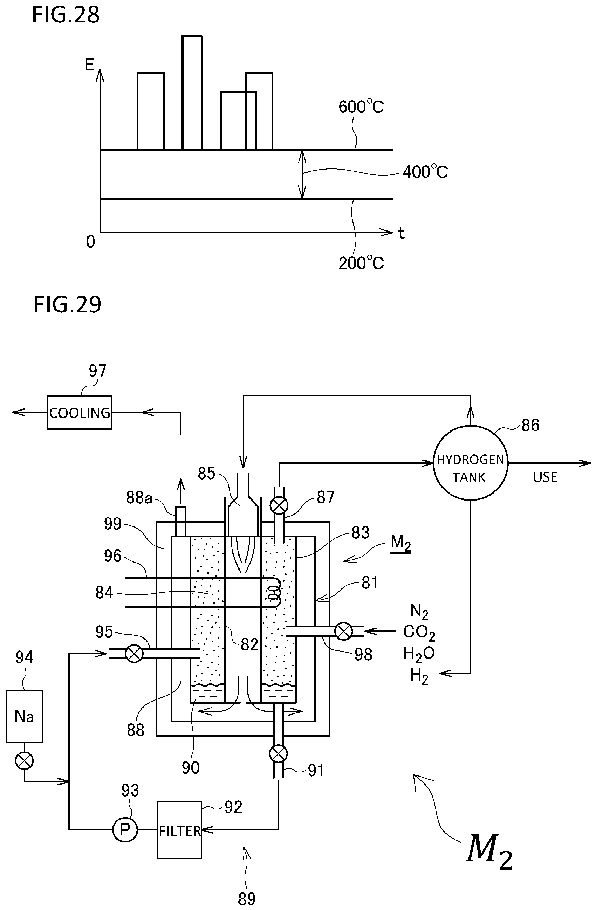

Figure 28 shows an adjusting way to maintain the plasma space at a temperature of 200°C to 300°C. Generation of heat by the plasma-reunion is so adjusted that the lowest temperature of the plasma space is preset at 600°C thereby to maintain the plasma space at 200°C even if calorie corresponding to the difference of temperature of 400°C is taken out of the plasma space. In this system, the electric heater 22 is used only at the time when an original plasma space is formed, and, thereafter, the plasma space is maintained at a temperature of 200°C to 300°C in spite of taking out a predetermined heat energy if the amount of the amplification agent 27 and the amount of pressurized hydrogen are properly adjusted. Therefore, the normal operation of the reactor does not necessitate the electric heater 22.

2) Treatment of $CO_2$

In Figure 1, when $CO_2$ is fed into the reactor 1 through the inflow pipe 4, the $CO_2$ is separated into C and O, each of which cooperates with electromagnetic waves in the plasma space for its ionization. At this time, C produces a plus ion $C^{4+}$ and four electrons, and each O absorbs two electrons to become a minus ion $O^{2-}$ (two O absorb four electrons). That is, number of ions in the plasma space increases, and, however, number of electrons therein does not increase. When high-energy electromagnetic waves collide with the nucleuses of these ions ($C^{4+}$, $O^{2-}$), the nucleuses are decayed in plasma little by little to generate hydrogen. The two ions $C^{4+}$ and $O^{2-}$ perform "quantum jump" in themselves to have an auxiliary function as amplification agent. Therefore, each of the two ions $C^{4+}$ and $O^{2-}$ may be called an auxiliary agent. Carbon C has the bonding energy of 7.5 MeV (Figure 18) per one nucleon, and its nuclear force is 90 MeV (7.5 × 12). Oxygen O has the bonding energy of 8 MeV which is almost the same as that of Na, and its nuclear force is 128 MeV (8×16). Therefore, the nuclear force of C is half of that of Na (8×23 → 184 MeV), and the nuclear force of O is approximately seven tenth of that of Na. That is, C and O are decayed in plasma easier than Na. Further, all $CO_2$ are not decayed in plasma instantly, and atoms that have collided with high-strength electromagnetic waves are decayed gradually. Accordingly, all atoms O separated from C are not transformed into hydrogen at one time, and the remaining O atoms produce oxides through a chemical reaction. As oxides, NaO and $Na_2O$ are produced with Na of an amplification agent, and $CO_2$ is produced with C of carbon layer on the inner wall surface. NaO and $Na_2O$ mentioned above are relatively heavy in shape of solid to drop from the plasma space onto the bottom of the reactor. However, they are gradually transformed into hydrogen through a plasma-decay. $CO_2$ generated from the carbon layer is gaseous and does not cover the carbon layer therewith so as not to obstruct generation of electromagnetic waves. Incidentally, the reactor can decompose poisonous PCB.

3) Treatment of $H_2O$

If water is supplied into the plasma space, much hydrogen can be obtained. At this time, H is instantly separated from O at a time when water in supplied into the reactor to produce hydrogen gas. However, O is gradually decayed in plasma to produce hydrogen while O, having not been decayed yet, produce NaO and $Na_2O$ by uniting with Na and $CO_2$ by uniting with C. NaO and $Na_2O$ drop down on the bottom of the reactor to be gradually transformed into hydrogen. When $H_2O$ has been treated for a long time, NaO and $Na_2O$ are piled up on the bottom of the reactor to cause a lack of sodium ions. Therefore, it is desirable that vaporized sodium is supplied into the reactor from another vaporizing reactor. By the way, O has herein a function as a supplementary amplification agent.

4) Treatment of Nitrogen Gas

Bonding energy per one nucleon of nitrogen is 7.8 MeV, and its nuclear force is 109.2 MeV (7.8×14) which correspond to six tenth that of Na. Therefore, N is decayed in plasma surely in the plasma space. When nitrogen gas ($N_2$ gas) is supplied into the plasma space, ammonia ($NH_3$) is produced by combination of N in the plasma space with H generated from nitrogen, and nitrogen (N) has a function as plus ion while hydrogen (H) has a function as minus ion to absorb electrons. Accordingly, the plasma space lacks electrons and its power decreases. In addition, when sodium is used as an amplification agent, $Na^+$ combines with $H^-$ions to produce a crystal of sodium hydride (NaH) on the inner wall surface of the reactor. To avoid this phenomenon, the plasma space must be heated at a temperature more than the decomposition temperature (400°C) of NaH crystal. Normally, the plasma space is heated at a temperature of 200°C to 300°C, and, in the case of treatment of N, it is desirable that the plasma space is heated at a temperature more than 400°C in order that energy of electromagnetic waves is increased to make up the lack of electrons and that the generation of NaH crystals is suppressed.
Production of hydrogen from nitrogen can contribute to desert greening. There is no water on desert, and, in that place, nitrogen separated from air is fed into the reactor to produce hydrogen which is taken out to be burned to obtain heat energy and steam. This steam is cooled to obtain water. In this manner, a large amount of water can be used on desert to grow up plants.

5) Utilization of 6 Fluorinated Uranium or 6 Fluorinated Plutonium

In the field of nuclear power generation at present, 6 fluorinated uranium ($UF_6$) is first produced, and, then, uranium 235 is produced, that is, the density of uranium 235 ($U^{235}$) is increased by centrifugation of 6 fluorinated uranium. This 6 fluorinated uranium is gas which is supplied into the plasma space. Bonding energy of $U^{235}$ per one nucleon is 7.7 MeV and its nuclear force is 1832.6 MeV (7.7×238) which correspond to $2.9 \times 10^{-10}$ J(joule). What frequency corresponds to the energy is calculated as follows.

$$\gamma = \frac{E}{h} = \frac{2.9 \times 10^{-10}}{6.6 \times 10^{-34}} = 4 \times 10^{23} \qquad \cdots \ (19)$$

Accordingly, a standing wave in range of far-infrared rays (frequency of $10^{13}$) can decay in plasma its fine particles because of $E = hv^2$. Even if the standing wave does not collide with those fine particles, there is a case that normal electromagnetic waves collide with those fine particles to generate high-energy electromagnetic waves through an amplification function of each fine particle, so that the high-energy electromagnetic waves decay in plasma various fine particles. In addition, the number of hydrogen atoms (proton) at a time of plasma-decay is much more than the number of other atoms (Na, O and C atoms) because a plasma-decay of $U^{235}$ produces 92 protons and a lot of neutrons. A ratio of plasma-reunion is increased to obtain a large amount of heat. At this time, an ionized fluorine (F⁻) is a negative element to absorb electrons, and Zn, Al, Ti, etc., as supplementary amplification agents are desirably added to the main amplification agents. 6 fluorinated plutonium ($P_u F_6$) can be used in the same manner.

9. Practical Apparatus

In order to utilize a heat energy obtained by a plasma reaction and a hydrogen energy obtained at the same time as the heat energy, the following apparatuses are conceivable.

In Figure29, a plasma reactor $M_2$ has a cylindrical main body 81 which is made of stainless steel, and the main body 81 comprises an inner cylinder 82 and an outer cylinder 83, between which a plasma space 84 is formed. The upper portion of the inner cylinder supports a hydrogen burner 85, and heating gas from the burner 85 passes through a heat removal room 88 to be discharged from a discharging pipe 88a provided at its upper end.

This discharged gas is cooled by a cooler 97 to be transformed into water which is utilized to grow up plants on deserts.

Hydrogen is supplied to the hydrogen burner 85 from a hydrogen tank 86 for staring the hydrogen gas produced in the plasma space 84, a part of which is fed into the plasma space 84 through a supplying pipe 98 as a supplementary amplification agent in order to promote a plasma-reunion. As the supplementary amplification agent, nitrogen ($N_2$), carbon dioxide ($CO_2$) or water ($H_2O$) is properly supplied, and those amplification agents themselves are decayed in plasma to produce hydrogen which is stored in the hydrogen tank 86 through a recovery pipe 87. A insulation vacuum room 99 is formed around the main body 81, and a circulation system 89 is provided outside of the room 99 to circulate liquid sodium or fluorinated lithium as a molten salt. In the circulation system 89, liquid sodium once stored at the bottom of the plasma space 84 is circulated, and the liquid sodium coming out of a discharging pipe 91 is filtered by a filter 92 to be fed into the system through a pump 93. If necessary, liquid sodium in a tank 94 is supplied into the system 89 to flow into the plasma space 84 through an inflow pipe 95. A heat exchanger 96 is disposed in the plasma space 84 which is maintained at a desired temperature of 200°C to 300°C in such a manner that the heat exchanger 96 takes out an energy generated from a balance between endothermic reaction of the plasma-decay and exothermic reaction of the plasma-reunion.

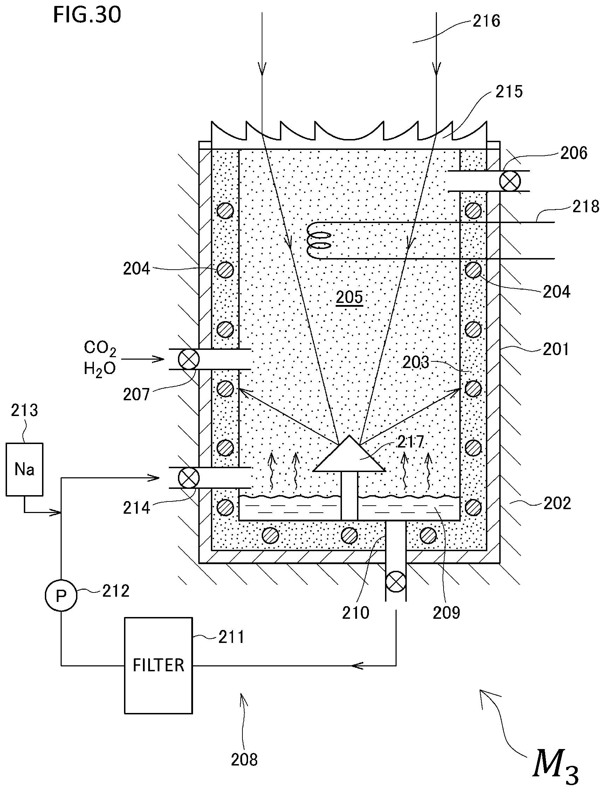

Figure 30 shows another embodiment in which a plasma reactor $M_3$ has a main body 201 made of stainless steel, and the outer surface of the main body 201 is covered with an insulation 202. A cylindrical carbon cylinder 203 molded with carbon is disposed on the inner surface of the main body 201, and an electric heater 204 is buried in the wall of the carbon cylinder 203 to adjust a temperature of the plasma space 205. The plasma space 205 is connected to a discharging pipe 206 for discharging hydrogen and a supplying pipe 207 for supplying carbon dioxide ($CO_2$) and water ($H_2O$) as supplementary energy amplification agents. Further, in this embodiment, as the plasma space 205 is formed in the carbon cylinder 203, even if the inner surface of the cylinder 203 reacts with oxygen ions ($O^{2-}$), gaseous $CO_2$ is simply produced, so that the inner surface is not covered with an oxide layer. Therefore, this embodiment is suitable for treatment of $CO_2$ or water.

Liquid sodium is fed to the bottom of the main body 201 through a circulation system 208 which has an emission pipe 210, a filter 211, a pump 212, a sodium tank 213 and an inflow pipe 214.

The upper end of the carbon cylinder 203 is closed with a Fresnel lens 215 which condenses solar light 216 to feed it into the plasma space 205, the solar light 216 reflects off a reflection cone 217 disposed on the bottom surface of the carbon cylinder 203 to be absorbed on the inner surface from which new electromagnetic waves are emitted. In the inside of the plasma space, the solar light 216 is amplified to contribute a plasma reaction. The feeding of both of the main and supplementary amplification agents in addition to the solar light produce an amount of heat which is taken out through a heat exchanger 218.

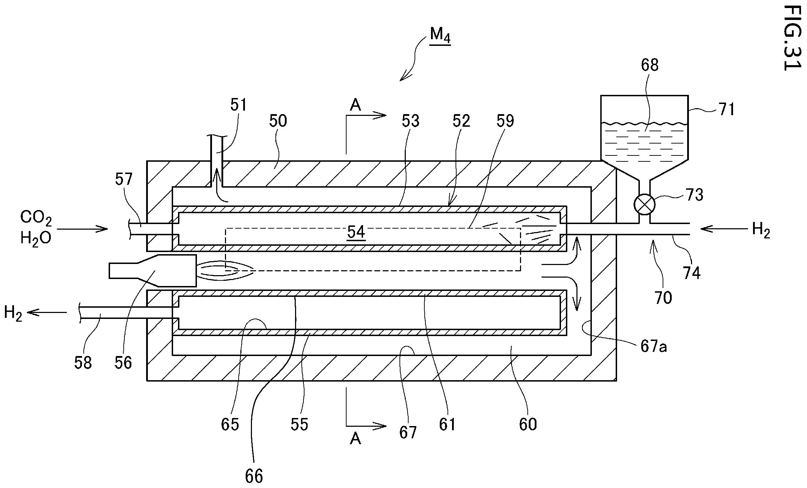

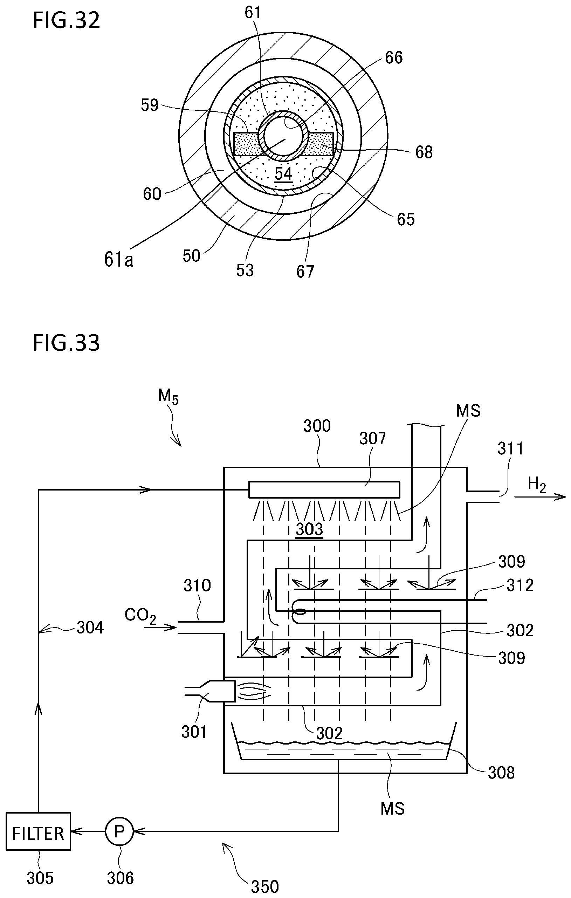

Next, in Figures 31 and 32, a lateral type of plasma reactor $M_4$ has a reactor 52 which is made of stainless steel (SUS304) and which comprises an outer cylinder 53, an inner cylinder 61 which is disposed at the center portion of the outer cylinder 53 and a heating cylinder 67 through which heating gas flows in order to heat the reactor 52. A plasma space 54 is formed between the outer cylinder 53 and the inner cylinder 61, while a warming room 60 is formed between the outer cylinder 53 and an insulation cylinder 67. A hydrogen burner 56 is disposed at the left end of the inner cylinder 61, and heating gas from the burner 56 reverses its course at the right end wall 67a of the insulation cylinder 67 to be discharged from a discharging pipe 51. At the left end wall of the reactor 52 is provided an inflow pipe 57 for supplying gas to be treated such as $CO_2$, $H_2O$, $N_2$, etc., or a gaseous amplification agent such as $UF_6$, and a discharging pipe 58 for discharging hydrogen which is generated in the plasma space. Carbon layers 65 and 66 are attached to the inner wall of the outer cylinder 53 and the outer circumferential wall of the inner cylinder 61, respectively. The carbon layers are opposed to each other to generate a kind of "black body radiation" and standing waves without oxide films, so that the energy amplification function of the plasma space becomes larger. Therefore, the temperature of the outer cylinder 53 becomes higher than that the inside 61a of the inner cylinder 61 with a temperature difference of more than 100°C, and even if the combustion of the burner is lowered, an efficient plasma reaction can be performed. The circumferential surface of the inner cylinder 61 (the inner surface of the plasma space 54) has a holding box 59 projecting therefrom in the left and right horizontal directions for accommodating an amplification agent 68 which is supplied therein from an ejecting device 70 disposed at the right end wall of the reactor 52. The ejecting device 70 is used for supplementing the amplification agent at a starting time of the plasma reactor $M_4$ and at a time when the amount of the amplification agent is decreased.

Figure 33 shows a plasma reactor $M_5$ for treating a large amount of $CO_2$, and the plasma reactor has a main body 300 in which a heating pipe 302 is disposed widely to heat the whole parts of a plasma space 303 at a predetermined uniform temperature. Adjacent to the reactor, a circulation device 350 is disposed to circulate a sodium molten salt, and the circulation device 350 has a filter 305 and a circulation pump 306. A molten salt MS is ejected from a shower structure 307 provided at the upper part of the reactor to the plasma space to drop in a tray 308 disposed on the lower bottom of the reactor. In the plasma space, a dispersing plate 309 in shape of punching plate is provided to disperse showers of molten salt while receiving them. $CO_2$ to be treated is supplied into the plasma space through an inflow pipe 310 provided on the side surface of the main body 300. Hydrogen gas produced by a plasma-reunion after a plasma-decay is stored, through a discharging pipe 311, in a hydrogen tank (not shown). When an exothermic reaction generates heat by the plasma-reunion, the heat can be taken out by a heat exchanger 312.

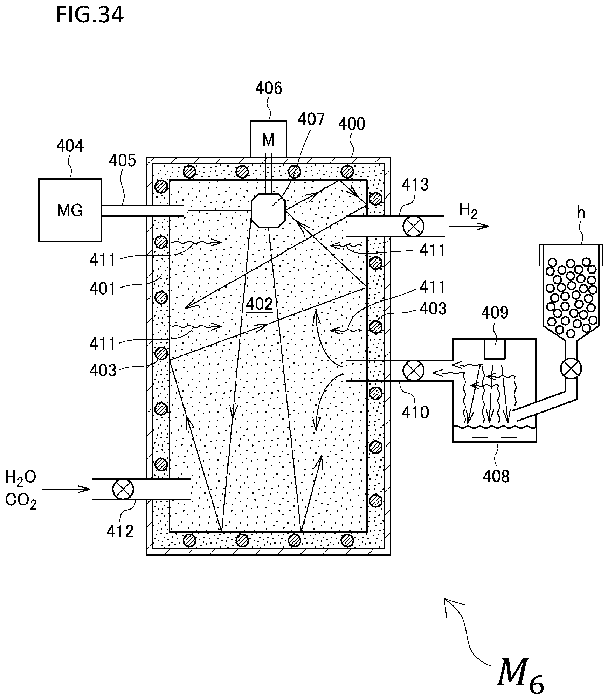

Figure 34 shows still another plasma reactor $M_6$ which has a different structure for generating electromagnetic waves and a main body 400 whose inner surface is covered with a carbon wall 401 in which an electric heater 403 for heating a plasma space 402 at a predetermined temperature is provided. On the upper left side of the main body 400 is provided a magnetron device 404 (electromagnetic wave emitting device) for emitting microwaves which are supplied into a plasma space 402 through a waveguide 405. The micro waves are reflected off a wave dispersing body 407 which is hung on the ceiling of the main body 400 in a rotatable manner to be dispersed in all directions. On the contrary, in the plasma space 402, fine particles of an amplification agent are moving at a high speed, and the fine particles of the amplification agent are supplied into the plasma space 402 by a fine particles generation device 408 which has an electron gun 409 provided on the ceiling of the device 408. The electron gun 409 emits electrons to an amplification agent (Na, Al, Zn, etc.,) located on the bottom of the device 408 to evaporate the agent so as to generate gaseous fine particles which are fed into the plasma space 402. The agent in the device 408 is supplemented by powders as an amplification agent in a hopper h. The plasma space 402 is maintained, by the electric heater 403 buried in the carbon wall 401, at a predetermined temperature. At this time, the fine particles of the amplification agent move at a speed more than 600m/s at approximately 200°C. The inner surface of the carbon wall 401 emits, at that temperature, standing waves as electromagnetic waves (far-infrared ray) 411, 411, ... 411. Gases to be treated ($CO_2$, $H_2O$, $N_2$, etc.,) are fed into the plasma space through an inflow pipe 412, and $H_2$ gas generated in the plasma space is taken out through a discharging pipe 413. In this manner, as the fine particles generation device 408 and the magnetron device 404 are provided outside of the main body 400, the fine particles and electrons can be supplied into the main body while the amount of them is controlled. Therefore, a plasma reaction can be controlled, and it is not necessary that the main body 400 is heated at a high temperature for generation of electromagnetic waves.

Utilization Possibility in the Field of Industry

This invention can be used in the field of hydrogen-related business and power generation business.

Explanation of Numerals

| | |
|---|---|
| 1 | reactor |
| 1a | reactor wall |
| 5 | plasma space |
| 6 | amplification agent |
| 20 | reactor |
| 23 | vaporizing furnace |
| 27 | hydrogen ejecting cylinder |
| 84 | plasma space |
| 203 | carbon cylinder |
| 205 | plasma space |

**Claims**

1. A method of plasma reaction, comprising the steps of:

forming a closed space with a wall surface which is heated to eject standing waves of electromagnetic waves;
heating the closed space at a temperature above a predetermined one;
supplying fine particles of an amplification agent for amplifying energy of the electromagnetic waves;
ionizing the fine particles by electromagnetic waves ejected from the wall surface and by other electromagnetic waves ejected from other fine particles to form a plasma space;
generating electromagnetic waves with a large energy on the basis of "the uncertainty principle";
decaying the fine particles of the amplification agent in the plasma space to separate fine particles decayed therein into protons, neutrons and electrons;
and
reuniting separated nucleons and electrons together with each other to generate plasma-reunion.

2. A method of plasma reaction according to claim 1, wherein gas to be treated is supplied into the plasma space to decay atoms of ingredients of the treated gas then to unite protons with neutrons as the plasma-reunion in which the protons and the neutrons are reunited with each other to heat the plasma space so as to raise its temperature.

3. A method of plasma reaction according to claim 2, wherein in order to increase exothermic reaction of the plasma space, hydrogen gas is supplied thereinto to increase number of the protons, and neutrons instead of protons are supplied to increase the plasma-reunion.

4. A method of plasma reaction according to claim 1, wherein the amplification agent is at least one element of the first or second group in main group elements shown in the periodic table or a compound including at least one element mentioned above, and gas to be treated is at least one kind of gases including carbon dioxide, steam, nitrogen gas, 6 uranium hexafluoride, 6 plutonium hexafluoride and PCB gas.

5. A method of plasma reaction according to claim 4, wherein the amplification agent includes at least one kind of stainless steel, zinc, iron, aluminum, copper, silver, gold, palladium, platinum, manganese, molybdenum, titanium and zirconium in shape of plate powder or clump or liquefied phosphorus or mercury.

6. A method of plasma reaction according to claim 1, wherein the wall surface for emitting electromagnetic waves therefrom comprises at least one kind of stainless steel material, carbon material and aluminum material.

7. A method of plasma reaction according to claim 1, wherein the amplification agent comprises molten salt which is dripped into the plasma space from an upper portion thereof, drips of the molten salt are collected at a lower portion of the plasma space to be circulated to an upper portion of the plasma space, and a heating pipe system is disposed in the plasma space to generate fine particles of the amplification agent by a cooperative function between the molten drips and the heating pipe system.

8. An apparatus for plasma reaction, comprising:

a main body of a plasma reactor whose wall surface forms a closed space to emit standing waves of electromagnetic waves when the wall surface is heated;
a heating device for heating the closed space at a predetermined temperature;
an amplification agent which is supplied into the closed space to form a plasma atmosphere in the closed space so that fine particles of the amplification agent amplify energy of the electromagnetic waves; and
a fine particle generation device for generating fine particles from the amplification agent,
an interaction between the standing waves and the fine particles generating a large energy at a certain rate.

9. An apparatus for plasma reaction according to claim 8, wherein the wall surface of the reactor comprises at least one kind of carbon material, stainless steel material, iron material, aluminum material and copper material.

10. An apparatus for plasma reaction according to claim 8, wherein the amplification agent comprises molten salt which includes at least one kind of metal sodium, metal potassium, and lithium fluoride, which is supplied into the plasma space of the reactor from outside, and which is then fed outside so as to be circulated through a circulating device.

11. An apparatus for plasma reaction according to claim 8, wherein the amplification agent comprises a combination of a compound including alkali metal and at least one kind of metal powders such as stainless steel powders, iron powders, aluminum powders, zinc powders and copper powders and is disposed in the plasma reactor so as to be able to be supplemented.

12. An apparatus for plasma reaction according to claim 8, wherein the heating device comprises an electric heater which is disposed in a wall of the plasma reactor, on an outer surface of the wall or in the plasma space.

13. An apparatus for plasma reaction according to claim 8, wherein the heating device comprises a heating pipe system disposed in the plasma reactor in order to feed heating gas from a gas burner thereinto.

14. An apparatus for plasma reaction according to claim 8, wherein hydrogen injection cylinders are disposed in an opposed manner, and pressurized hydrogen is supplied into the hydrogen injection cylinders.

15. An apparatus for plasma reaction according to claim 14, wherein a heat exchanger is disposed in the plasma space to take out a part of heat in the plasma space.

16. An apparatus for plasma reaction according to claim 8, wherein the fine particle generation device comprises a bottom wall of the reactor main body and a heating device for heating the bottom wall thereof.

17. An apparatus for plasma reaction according to claim 8, wherein the fine particle generation device is disposed outside of the reactor main body and has an electromagnetic gun to eject electrons onto the amplification agent to evaporate it.

18. An apparatus for plasma reaction according to claim 8, wherein a magnetron as an electromagnetic waves emitting device is provided outside of the main body thereof and electromagnetic waves generated from the device are emitted in the plasma reactor in various directions.

FIG.1

FIG.2

FIG.3

VAPORIZATION

Na ATOM

9

10  2  1a  1

FIG.4

5  6

1

101

100

FIG.5

6

5

1

103

103  102

FIG.6

FIG.7

FIG.8

FIG.9

FIG.10

FIG.11

FIG.12

FIG.13

FIG.14

FIG.15

FIG.16

FIG.17

FIG.18

FIG.19

## FIG.20

GAS GENERATED FROM $K_2 T_i O_3$

## FIG.21

PRESSURE GAUGE

H₂

THERMOMETER

ELECTRIC HEATER

V·P

CONTROLLER

Na

## FIG.22

0.05MPa

0.075MPa

0.1MPa

0

POSITIVE PRESSURE GAUGE

-0.05MPa

-0.075MPa

-0.1MPa

0

NEGATIVE PRESSURE GAUGE

## FIG.23

## FIG.24

FIG.25

H

e$^-$

p

VACUUM

H$^+$

p

FIG.26

FIG.27

PROTON

HIGH-ENERGY
ELECTROMAGNETIC
WAVE $r_1$

$r_1$

NEUTRON

$5 \times 10^{-15}$m

n

NUCLEAR FORCE RANGE

$r_1$

n

NEUTRON

PROTON

p HIGH-ENERGY ELECTROMAGNETIC WAVE $r_1$

FIG.28

FIG.29

FIG.30

FIG.31

FIG.32

FIG.33

FIG.34

**INTERNATIONAL SEARCH REPORT**

International application No.

PCT/JP2020/039235

A. CLASSIFICATION OF SUBJECT MATTER
H05H 1/24(2006.01)i
FI: H05H1/24

According to International Patent Classification (IPC) or to both national classification and IPC

B. FIELDS SEARCHED

Minimum documentation searched (classification system followed by classification symbols)
H05H1/00-1/54, G21B3/00, G21G1/12

Documentation searched other than minimum documentation to the extent that such documents are included in the fields searched
Published examined utility model applications of Japan       1922-1996
Published unexamined utility model applications of Japan     1971-2020
Registered utility model specifications of Japan             1996-2020
Published registered utility model applications of Japan     1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2016-17787 A (ISHIKAWA, Yasuo) 01 February 2016 (2016-02-01) entire text, all drawings | 1-18 |
| A | JP 2004-527727 A (CRT HOLDINGS, INC.) 09 September 2004 (2004-09-09) entire text, all drawings | 1-18 |
| A | JP 2014-25743 A (TI KK) 06 February 2014 (2014-02-06) entire text, all drawings | 1-18 |
| A | WO 2012/011499 A1 (TI KK) 26 January 2012 (2012-01-26) entire text, all drawings | 1-18 |

☐ Further documents are listed in the continuation of Box C.     ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 December 2020 (21.12.2020) | 28 December 2020 (28.12.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2020/039235

| Patent Documents referred in the Report | Publication Date | Patent Family | Publication Date |
|---|---|---|---|
| JP 2016-17787 A | 01 Feb. 2016 | (Family: none) | |
| JP 2004-527727 A | 09 Sep. 2004 | US 2003/0152184 A1 entire text, all drawings US 2006/0008043 A1 US 2008/0043895 A1 WO 2002/003417 A2 EP 1312247 A AU 8639101 A CA 2415137 A | |
| JP 2014-25743 A | 06 Feb. 2014 | (Family: none) | |
| WO 2012/011499 A1 | 26 Jan. 2012 | US 2013/0188763 A1 entire text, all drawings EP 2597652 A1 SG 187027 A KR 10-2013-0042570 A CN 103608869 A BR 112013001396 A | |

Form PCT/ISA/210 (patent family annex) (January 2015)

**EP 4 050 974 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012011499 A1
- JP 2017222550 A
- JP 2017022250 A